# EUROPÄISCHE PATENTANMELDUNG

(11) **EP 4 331 805 A2**
(43) Veröffentlichungstag der Anmeldung: **06.03.2024**
(21) Anmeldenummer: 23218536.3
(22) Anmeldetag: 15.10.2020
(51) Int. Cl.: B29C 48/11

(54) **EXTRUSIONSVORRICHTUNG UND EXTRUSIONSVERFAHREN**

(30) Priorität: 15.10.2019 DE 102019215876
(62) Teilanmeldung aus: 20793615.4
(71) Anmelder: Exelliq Austria GmbH, 4542 Nußbach (AT)
(72) Erfinder: DIESENREITER, Wolfgang, 4550 Kremsmünster (AT); GEBESMAIER, Karl, 4560 Kirchdorf/Krems (AT)
(74) Vertreter: Maikowski & Ninnemann Patentanwälte Partnerschaft mbB

(57) **Zusammenfassung**

Die Erfindung betrifft eine Extrusionsvorrichtung für ein Kunststoffprofil (10), insbesondere ein Hohlkammerprofil, mit einem Extruder (1), einer am Ausgang des Extruders (1) angeordneten Extrusionsdüse (2) zur Formung des Kunststoffprofils (10), wobei das Kunststoffprofil (10) anschließend durch eine Kalibriervorrichtung (3) geführt wird, einer nachgeschalteten Abzugsvorrichtung (4) für das Kunststoffprofil (10), einer Ablängvorrichtung (5) zur Abtrennung von Teilen des extrudierten Kunststoffprofils (10) und einer Verwiegevorrichtung (6) zur Messung des Profilgewichts. Erfindungsgemäß ist eine Profilüberwachungsvorrichtung (20) zur Erfassung mindestens eines Profilparameters des Kunststoffprofils (10) in Extrusionsrichtung (E) nach dem Austreten aus der Extrusionsdüse (2) und / oder einer Prozessüberwachungsvorrichtung (21) zur Erfassung mindestens eines Prozessparameters im und / oder vor dem Extruder (1), der Extrusionsdüse (2), der Kalibriervorrichtung (3), der Abzugsvorrichtung (4) und / oder der Ablängvorrichtung (5)vorgesehen,
wobei die Daten der Profilüberwachungsvorrichtung (20) und / oder der Prozessüberwachungsvorrichtung (21) durch eine Steuervorrichtung (30) dazu verwendbar sind, mindestens eine Stellgröße (S1, S2, S3, S4, S5, S6) am Extruder (1), an der Extrusionsdüse (2), an der Kalibriervorrichtung (3) an der Abzugsvorrichtung (4) und / oder an der Ablängvorrichtung (5) in Abhängigkeit von den Daten einzustellen. Die Erfindung betrifft ferner ein Extrusionsverfahren, eine Einziehvorrichtung, eine Positioniereinrichtung und eine Kalibriervorrichtung.

## Beschreibung

Die Erfindung betrifft eine Extrusionsvorrichtung mit den Merkmalen der Anspruchs 1, ein Extrusionsverfahren mit den Merkmalen des Anspruchs 23, eine Einziehvorrichtung mit den Merkmalen des Anspruchs 24, eine Positioniereinrichtung mit den Merkmalen des Anspruchs 35 und eine Kalibriervorrichtung mit den Merkmalen des Anspruchs 36.

Extrusionsvorrichtungen für die Herstellung von Kunststoffprofilen sind grundsätzlich bekannt. Kennzeichnend ist, dass festes Kunststoffmaterial in einem Extruder aufgeschmolzen und anschließend durch eine Extrusionsdüse in Form gebracht wird. Das plastische Kunststoffprofil muss dann unter Einhaltung strenger Qualitätsanforderungen an Maßhaltigkeit und Oberflächengüte verfestigt werden, damit es in einer Ablängvorrichtung zugeschnitten werden kann.

Das Kunststoffprofil kann beispielsweise ein Hohlkammerprofil sein. Derartige Kunststoffprofile können für die Herstellung von Fensterrahmen vorgesehen sein. Die Extrusionsdüse zur Formung des Kunststoffprofils ist an einem Ausgang des Extruders angeordnet. Nach der Extrusion aus dem Ausgang des Extruders wird das Kunststoffprofil durch eine Kalibriervorrichtung geführt. Der Kalibriervorrichtung ist eine Abzugsvorrichtung nachgeschaltet. Mit der Abzugsvorrichtung kann eine Abzugskraft in das Kunststoffprofil eingeleitet werden, sodass das Kunststoffprofil durch die Kalibriervorrichtung und gegebenenfalls durch weitere Vorrichtungen entlang einer Extrusionsrichtung hindurch gezogen wird. Der Abzugsvorrichtung nachgeschaltet ist eine Ablängvorrichtung zur Abtrennung von Teilen des extrudierten Kunststoffprofils. Beispielsweise kann das Kunststoffprofil mit der Ablängvorrichtung in Abschnitte abgelängt werden.

Es besteht die Aufgabe, diesen Vorgang wirtschaftlich und qualitativ zu verbessern.

Die Aufgabe wird durch eine Extrusionsvorrichtung mit den Merkmalen des Anspruchs 1 gelöst.

Demnach kann eine Profilüberwachungsvorrichtung zur Erfassung mindestens eines Profilparameters des Kunststoffprofils in Extrusionsrichtung nach dem Austreten aus der Extrusionsdüse vorgesehen sein.

Zusätzlich oder alternativ kann eine Prozessüberwachungsvorrichtung zur Erfassung mindestens eines Prozessparameters im und / oder vor dem Extruder, der Extrusionsdüse, der Kalibriervorrichtung, der Abzugsvorrichtung und / oder der Ablängvorrichtung vorgesehen sein.

Die Daten der Profilüberwachungsvorrichtung und / oder der Prozessüberwachungsvorrichtung können durch eine Steuervorrichtung dazu verwendbar sein, mindestens eine Stellgröße oder einen Satz von Stellgrößen am Extruder, an der Extrusionsdüse, an der Kalibriervorrichtung, an der Abzugsvorrichtung und / oder an der Ablängvorrichtung in Abhängigkeit von den Daten einzustellen.

Die Daten können beispielsweise durch die Profilüberwachungsvorrichtung aus dem mindestens einen Profilparameter des Kunststoffprofils erzeugt werden. Ebenso können die Daten durch die Prozessüberwachungsvorrichtung aus dem mindestens einen Prozessparameter erzeugt werden. Die Daten können somit mindestens einen Profilparameter und/oder mindestens einen Prozessparameter umfassen.

In einer Ausführungsform ist der mindestens eine Profilparameter mindestens eine Wanddicke, insbesondere eine Hauptwandstärke, oder ein Füllgrad des Kunststoffprofils. Das Kunststoffprofil kann eine Wand oder mehrere Wände aufweisen, deren Wanddicken mit der Profilüberwachungsvorrichtung messbar sein können. Entsprechend können mehrere Wanddicken in die durch die Profilüberwachungsvorrichtung erzeugten Daten einfließen. Insbesondere kann der mindestens eine Profilparameter eine Abmessung des Kunststoffprofils, beispielsweise eine Höhe und / oder eine Breite des Kunststoffprofils jeweils quer zur Extrusionsrichtung, sein. Zudem kann der mindestens eine Profilparameter mindestens ein Parameter betreffend einen Schrumpf des Kunststoffprofils sein. Ein Schrumpf kann beispielsweise eine Verkleinerung einer Länge des Kunststoffprofils sein.

In einer Ausführungsform ist der mindestens eine Profilparameter mindestens ein Parameter betreffend eine Oberflächengüte des Kunststoffprofils. Die Oberflächengüte kann beispielsweise durch optische Eigenschaften der Oberfläche bestimmbar sein. Insbesondere kann die Oberflächengüte durch eine Farbe oder eine Verfärbung der Oberfläche charakterisierbar sein. Die Oberflächengüte kann ebenso durch die Fähigkeit des Kunststoffprofils, Licht ganz oder teilweise zu reflektieren charakterisierbar sein. Insbesondere kann der mindestens eine Parameter einen Glanz oder eine Mattigkeit des Kunststoffprofils betreffen. Der mindestens eine Profilparameter kann ebenso mindestens ein Parameter betreffend eine Streifigkeit des Kunststoffprofils sein. Eine Streifigkeit kann beispielsweise durch Unebenheiten, die in Streifen regelmäßig auftreten, oder streifenartige Verfärbungen gebildet sein.

In einer Ausführungsform ist der mindestens eine Profilparameter mindestens ein Parameter einer Formabweichung des Kunststoffprofils von einer vorgegebenen Form. Der derartig bestimmte mindestens eine Parameter kann als eine Differenz verstanden werden zwischen der vorgegebenen Form des Kunststoffprofils und der mit der Profilüberwachungsvorrichtung bestimmten Form des Kunststoffprofils. Die Formabweichung kann insbesondere durch einen Krümmungsparameter und/oder einen Winkelparameter bestimmt sein. Der Krümmungsparameter kann beispielsweise angeben, wie konvex oder konkav eine Oberfläche des Kunststoffprofils geformt ist. Die Profilüberwachungsvorrichtung kann dazu eingerichtet sein, zu bestimmen ob ein hohles oder balliges Kunststoffprofil vorliegt. Insbesondere kann der mindestens eine Parameter der Formabweichung des Kunststoffprofils ein Grad einer Bombierung des Kunststoffprofils sein.

In einer Ausführungsform ist der mindestens eine Profilparameter mindestens eine Temperatur des Kunststoffprofils. Der mindestens eine Profilparameter kann weiterhin ein Metergewicht des Kunststoffprofils, also ein Gewicht des Kunststoffprofils pro Längeneinheit, und/oder eine Oberflächengüte sein.

Aus dem mindestens einen Profilparameter kann die Profilüberwachungsvorrichtung Daten erzeugen, die beispielsweise eine konkrete Angabe des mindestens einen Profilparameters, beispielsweise "Profilhöhe", und / oder eine gegebenenfalls zugeordnete skalare Größe, beispielsweise "62 mm", umfassen.

In einer Ausgestaltung ist eine optische Erfassungsvorrichtung für Wanddicken des Kunststoffprofils, für die Oberflächengüte des Kunststoffprofils und / oder die Formabweichung des Kunststoffprofils vorgesehen. In einer derartigen Ausgestaltung kann der mindestens eine Profilparameter mindestens ein Parameter betreffend eine Oberflächengüte des Kunststoffprofils sein. Die Erfassungsvorrichtung für Wanddicken des Kunststoffprofils kann in einer Ausgestaltung die Wanddicken mit Schallwellen oder elektromagnetischer Strahlung erfassen. Insbesondere kann die Erfassungsvorrichtung die Wanddicken des Kunststoffprofils mit Ultraschall- oder Terahertzmessungen bestimmen.

Im Folgenden werden einige Prozessparameter dargestellt, die alternativ oder zusätzlich zu den Profilparametern verwendet werden können.

Zunächst kann der mindestens eine Prozessparameter mindestens ein Qualitätsparameter des Kunststoffs selbst sein.

Der mindestens eine Prozessparameter kann ebenso mindestens ein Geschwindigkeitswert des Kunststoffprofils in der Extrusionsvorrichtung sein. Der mindestens eine Geschwindigkeitswert des Kunststoffprofils in der Extrusionsvorrichtung kann beispielsweise charakterisieren, wie schnell sich das Kunststoffprofil entlang der Extrusionsrichtung fortbewegt.

In einer Ausführungsform ist der mindestens eine Prozessparameter mindestens eine geometrische Ausrichtung der Kalibriervorrichtung und/oder der Abzugsvorrichtung auf die Extrusionsdüse. Die mindestens eine geometrische Ausrichtung kann beispielsweise einen Winkel und / oder einen Abstand umfassen, in dem die Kalibriervorrichtung und/oder die Abzugsvorrichtung relativ zu der Extrusionsdüse angeordnet sind.

In einer Ausführungsform ist der mindestens eine Prozessparameter mindestens eine Temperatur und/oder ein Druck im Extruder, in der Extrusionsdüse, in der Kalibriervorrichtung und/oder in der Abzugsvorrichtung. In einer Ausgestaltung ist eine Temperaturmessvorrichtung und/oder eine Druckmessvorrichtung im Extruder, in der Extrusionsdüse, in der Kalibriervorrichtung und/oder in der Abzugsvorrichtung vorgesehen, um dort jeweils die Temperatur und/oder den Druck zu messen.

In einer Ausführungsform ist der mindestens eine Prozessparameter mindestens eine Kraftmessung an der Abzugsvorrichtung. Der mindestens eine Prozessparameter kann eine Abzugskraft charakterisieren, die die Abzugsvorrichtung auf das Kunststoffprofil ausübt. Ebenso kann der mindestens eine Prozessparameter mindestens eine Messung der Abzugsgeschwindigkeit sein. Der mindestens eine Prozessparameter kann eine Abzugsgeschwindigkeit charakterisieren, mit der sich das Kunststoffprofil durch die Abzugsvorrichtung entlang der Extrusionsrichtung fortbewegt.

In einer Ausführungsform ist der mindestens eine Prozessparameter mindestens eine Längenmessung an der Ablängvorrichtung. Der mindestens eine Prozessparameter kann eine Länge der Abschnitte des Kunststoffprofils, die an der Ablängvorrichtung erzeugt werden, charakterisieren. Der mindestens eine Prozessparameter kann ebenso mindestens eine Wiegung an der Ablängvorrichtung sein. Für die mindestens eine Wiegung kann der Abschnitt des Kunststoffprofils, der an der Ablängvorrichtung erzeugt wurde, gewogen werden.

Zudem kann der mindestens eine Prozessparameter eine Belastung eines Antriebs des Extruders sein. Insbesondere kann der mindestens eine Prozessparameter eine Motorbelastung des Extruders sein.

In einer Ausführungsform ist die mindestens eine Stellgröße ein Fahrparameter der Extrusionsvorrichtung. Die mindestens eine Stellgröße kann beispielsweise eine Stellgröße am Extruder sein. Am Extruder kann die mindestens eine Stellgröße beispielsweise eine Mischungseinstellung mindestens eines dem Extruder zugeführten Kunststoffs sein. Beispielsweise kann die mindestens eine Stellgröße ein Mischverhältnis für unterschiedliche Sorten von Kunststoffen am Extruder sein.

Die mindestens eine Stellgröße am Extruder kann ebenso eine Temperatur des Extruders sein. Die mindestens eine Stellgröße kann beispielsweise eine Temperatur eines Abschnitts des Extruders, beispielsweise einer Zylindertemperatur, insbesondere vor oder nach einer Entgasung des Extruders, sein. Zudem kann die mindestens eine Stellgröße eine Drehzahl einer oder mehrerer Extrusionsschnecken sein. Die mindestens eine Stellgröße kann insbesondere eine Drehzahl des Antriebs des Extruders sein.

In einer Ausführungsform ist die mindestens eine Stellgröße an der Extrusionsdüse eine Temperatur. In einer Ausgestaltung ist die Temperatur durch eine Temperiervorrichtung einstellbar. Die Temperatur kann hierbei durch die Temperiervorrichtung lokal auf einen Bereich des Kunststoffprofils einstellbar sein. Ein Bereich des Kunststoffprofils kann beispielsweise ein Bereich an einem Querschnitt des Kunststoffprofils, wie eine Ecke, eine Kante oder eine Gerade sein.

In einer Ausführungsform ist die mindestens eine Stellgröße ein Fluidstrom. Die mindestens eine Stellgröße kann beispielsweise eine Strömungsgeschwindigkeit oder ein Volumendurchsatz pro Zeiteinheit oder Temperatur des Fluidstroms sein. Der Fluidstrom kann mindestens einen Teil des Kunststoffprofils temperieren. Der mindestens eine Teil des Kunststoffprofils kann beispielsweise ein Bereich an einem Querschnitt des Kunststoffprofils oder ein Bereich, der entlang der Extrusionsrichtung erstreckt ist, sein. Der Fluidstrom kann das Kunststoffprofil oder das mindestens eine Teil des Kunststoffprofils innerhalb der Extrusionsdüse und/oder außerhalb der Extrusionsdüse temperieren. Insbesondere kann der Fluidstrom das Kunststoffprofil oder das mindestens eine Teil des Kunststoffprofils in mindestens einer Werkzeugzone temperieren.

In einer Ausführungsform ist die mindestens eine Stellgröße eine Temperatur an der Kalibriervorrichtung. Ebenso kann die mindestens eine Stellgröße ein Druck an der Kalibriervorrichtung sein. Die mindestens eine Stellgröße kann ebenso eine Temperatur und ein Druck an der Kalibriervorrichtung sein. Bei der Kalibriervorrichtung kann es sich insbesondere um eine Trockenkalibrierung oder Nasskalibrierung handeln. Ebenso kann es sich bei der Kalibriervorrichtung um eine Trocken- und Nasskalibrierung handeln. Die mindestens eine Stellgröße kann ebenso eine Wasserdurchflussmenge in der Nasskalibrierung sein. Dementsprechend kann die mindestens eine Stellgröße eine Strömungsgeschwindigkeit oder eine Durchflussmenge an Wasser durch die Kalibriervorrichtung pro Zeit sein. Ebenso denkbar und möglich ist es, dass die Kalibriervorrichtung mindestens eine Trockenkalibrierung und/oder mindestens eine Nasskalibrierung umfasst.

In einer Ausführungsform ist die mindestens eine Stellgröße ein Vakuum an der Kalibriervorrichtung. Insbesondere kann die mindestens eine Stellgröße ein Vakuum an oder ab der mindestens einen Trockenkalibrierung sein. Die mindestens eine Stellgröße kann ebenso ein Vakuum in der Nasskalibrierung sein.

In einer Ausführungsform ist die mindestens eine Stellgröße an der Kalibriervorrichtung eine Positionsänderung der Kalibriervorrichtung, insbesondere der Trockenkalibriervorrichtung, in Bezug auf die Extrusionsdüse. Beispielsweise kann die mindestens eine Stellgröße an der Kalibriervorrichtung ein Winkel und/oder ein Abstand zwischen der Kalibrierdüse und der Extrusionsdüse sein.

In einer weiteren Ausführungsform ist die mindestens eine Stellgröße an der Abzugsvorrichtung eine Abzugsgeschwindigkeit und/oder Abzugskraft. Beispielsweise kann die mindestens eine Stellgröße eine Drehzahl eines Antriebs der Abzugsvorrichtung oder eine Klemmkraft, mit der die Abzugsvorrichtung das Kunststoffprofil einklemmt, sein.

Grundsätzlich kann die mindestens eine Stellgröße manuell einstellbar sein. Dazu kann eine Bedienperson in Abhängigkeit des mindestens einen Profilparameters und/oder des mindestens einen Prozessparameters die mindestens eine Stellgröße einstellen. Der Bedienperson kann dazu einen Vorschlag für eine Fahrweise der Extrusionsvorrichtung übermittelt werden. Der Vorschlag für die Fahrweise der Extrusionsvorrichtung kann einen Vorschlag für mindestens eine Stellgröße umfassen. Die Bedienperson kann zur Bestimmung des mindestens einen Prozessparameters und/oder des mindestens einen Profilparameters einen Rechner benutzen. Ebenso kann die Bedienperson für die Einstellung der mindestens einen Stellgröße einen Rechner benutzen. Beispielsweise kann der Rechner dazu eingerichtet sein, der Bedienperson anhand des mindestens einen Profilparameters und/oder des mindestens einen Prozessparameters den Vorschlag für die Einstellung der mindestens einen Stellgröße anzuzeigen. Insbesondere kann auf dem Rechner dazu eine Software vorgesehen sein, die ein Assistenzsystem zur Verfügung stellt. In einer Ausgestaltung entnimmt die Bedienperson einen Abschnitt eines Kunststoffprofils als Muster und ermittelt den mindestens einen Prozessparameter und/oder den mindestens einen Profilparameter, insbesondere durch eine Qualitätsvermessung. Die Software kann anhand der Qualitätsvermessung einen Vorschlag für eine optimale Fahrparameteranpassung liefern.

In einem Beispiel ist der mindestens eine Profilparameter eine Bombierung. Aufgrund der Qualitätsvermessung kann die Bedienperson beispielsweise ermitteln, dass die Bombierung zu konvex ist. Davon ausgehend kann der Bedienperson, insbesondere durch eine Software, als Vorschlag übermittelt werden, das Vakuum in der Kalibriervorrichtung zu verringern, da durch zu hohes Vakuum das Kunststoffprofil überdehnt wird. Alternativ oder zusätzlich kann der Bedienperson als Vorschlag übermittelt werden, den Gesamtausstoß zu senken, beispielsweise, indem die Drehzahl der Extrusionsschnecken sowie optional oder zusätzlich die Abzugsgeschwindigkeit synchron verringert wird. Alternativ oder zusätzlich kann der Bedienperson als Vorschlag übermittelt werden, die Temperatur der Trockenkalibrierung zu senken. Alternativ oder zusätzlich kann der Bedienperson als Vorschlag übermittelt werden, den Wasserdurchfluss der Trockenkalibrierung zu erhöhen.

In einer Ausführungsform ist der mindestens eine Profilparameter und/oder der mindestens eine Prozessparameter in-line erfassbar. In einer Ausgestaltung bedeutet in-line, dass der mindestens eine Profilparameter und/oder der mindestens eine Prozessparameter direkt an der Extrusionsvorrichtung erfassbar ist. In-line kann zusätzlich auch bedeuten, dass der mindestens eine Profilparameter und/oder der mindestens eine Prozessparameter während des Betriebes der Extrusionsvorrichtung erfassbar ist. Im Gegensatz dazu kann off-line bedeuten, dass der mindestens eine Profilparameter und/oder der mindestens eine Prozessparameter abseits der Extrusionsvorrichtung oder während des Stillstandes der Extrusionsvorrichtung oder abseits der Extrusionsvorrichtung bestimmbar ist. Die Erfassung des mindestens einen Profilparameters und/oder des mindestens einen Prozessparameters off-line kann iterativ in einem vorbestimmten Intervall, insbesondere in einem Intervall von mehreren Stunden, insbesondere drei Stunden, durchgeführt werden.

Beispielsweise kann durch die optische Erfassungsvorrichtung die Wanddicke des Kunststoffprofils, die Oberflächengüte des Kunststoffprofils und/oder die Formabweichung des Kunststoffprofils in-line bestimmbar sein. Im Gegensatz dazu kann beispielsweise die Wanddicke des Kunststoffprofils durch Vermessen des Kunststoffprofils beispielsweise nach der Entnahme des Kunststoffprofils durch eine Bedienperson off-line bestimmbar sein.

In einer Ausgestaltung ist der mindestens eine in-line erfasste Profilparameter und/oder der mindestens eine in-line erfasste Prozessparameter durch die Steuervorrichtung automatisch zur Einstellung mindestens eines Steuersignals verwendbar. Insbesondere können die Daten der Profilüberwachungsvorrichtung und/oder der Prozessüberwachungsvorrichtung durch die Steuervorrichtung dazu verwendbar sein, automatisch das mindestens eine Steuersignal in Abhängigkeit von den Daten einzustellen. Das mindestens eine Steuersignal kann beispielsweise mindestens eine Stellgröße am Extruder, an der Extrusionsdüse, an der Kalibriervorrichtung, an der Abzugsvorrichtung und/oder an der Ablängvorrichtung umfassen.

In einer Ausgestaltung, in der vor dem Extruder mindestens eine vorgeschaltete Vorrichtung angeordnet ist, kann das mindestens eine Steuersignal zusätzlich oder optional mindestens eine Stellgröße der mindestens einen vorgeschalteten Vorrichtung umfassen. Insbesondere kann die mindestens eine Stellgröße daher eine in-line Überwachung einer Schmelzequalität einer Kunststoffschmelze, aus der das Kunststoffprofil im Extruder geformt wird, eine in-line Dry-Blend-Überwachung der Kunststoffschmelze und/oder eine Dosierung durch Gravimetrie der Kunststoffschmelze umfassen.

Die automatische Einstellung des mindestens einen Steuersignals kann in Abwesenheit einer Bedienperson vorgenommen werden. Die automatische Einstellung kann dadurch ermöglicht werden, dass zwischen dem mindestens einen Profilparameter und dem mindestens einen Steuersignal eine, insbesondere mathematische, numerische oder formelhafte, Beziehung vorgegeben ist. Ebenso kann für den mindestens einen Prozessparameter oder eine Kombination zwischen dem mindestens einen Profilparameter dem mindestens ein Prozessparameter eine Beziehung zu dem mindestens einen Steuersignal vorgegeben sein.

Das mindestens eine Steuersignal kann in Abhängigkeit des mindestens einen Profilparameters und/oder des mindestens einen Prozessparameters automatisch einstellbar sein. In einer Ausgestaltung wird der mindestens eine Profilparameter und/oder der mindestens eine Prozessparameter in regelmäßigen Abständen an die Steuervorrichtung zur Einstellung des mindestens einen Steuersignals übermittelt. Insbesondere kann eine Vielzahl von Steuersignalen gleichzeitig in Abhängigkeit des mindestens einen Profilparameters und/oder des mindestens einen Prozessparameters automatisch einstellbar sein. Hierbei kann von mindestens einem aktuellen Steuersignal, beispielsweise einem Betriebspunkt der Extrusionsvorrichtung, und mindestens einem aktuellen Prozessparameter und/oder mindestens einem aktuellen Profilparameter, also beispielsweise aktuellen Qualitätswerten der produzierten Kunststoffprofile, ausgegangen werden. Dadurch kann ein Prozessfenster im Betrieb der Extrusionsvorrichtung in Echtzeit maximierbar sein. Das Prozessfenster kann eine Anzahl oder ein Intervall möglicher Werte von mindestens einer Stellgröße, mindestens eines Profilparameters oder mindestens eines Prozessparameters umfassen, die idealerweise für die Optimierung in Betracht gezogen werden sollen. Ein großes Prozessfenster kann einen größeren Spielraum bei mindestens einem Profilparameter ermöglichen, so dass Veränderungen von Prozessparametern leichter kompensiert werden können. Dadurch kann der Ausschuss von Kunststoffprofilen mit unerwünschten Profilparametern minimiert werden.

In einer Ausführungsform kann die Steuervorrichtung ein Mittel zur Mehrgrößenregelung aufweisen, wobei die erfassten Profilparameter und / oder die erfassten Prozessparameter als Eingangsgrößen dienen.

Die Steuervorrichtung, beispielsweise eine speicherprogrammierbare Steuerung (SPS), kann zur Einstellung des mindestens einen Steuersignals insbesondere eine Regelschleife aufweisen. Die Regelschleife kann insbesondere multidimensional sein. Ebenso kann es sich um eine intelligente, multidimensionale Regelschleife handeln. Über die Regelschleife kann der mindestens eine Profilparameter und/oder der mindestens eine Prozessparameter als Eingang mit dem mindestens einen Steuersignal als Ausgang verknüpft sein.

Die Einstellung des mindestens einen Steuersignals in Abhängigkeit der Daten kann eine Änderung des mindestens einen Profilparameters und/oder des mindestens einen Prozessparameters verursachen. Das mindestens eine Steuersignal kann insbesondere solange eingestellt werden, bis mindestens ein gewünschter Profilparameter und/oder mindestens ein gewünschter Prozessparameter erreicht ist. Eine Größe einer Abweichung des mindestens einen aktuellen Profilparameters und/oder des mindestens einen aktuellen Prozessparameters von dem mindestens einen gewünschten Profilparameter und/oder von dem mindestens einen gewünschten Prozessparameter kann dazu verwendet werden, eine Größe der Änderung des mindestens einen Steuersignals bei der Einstellung vorzugeben.

Unterschiedliche Profilparameter und/oder Prozessparameter können unterschiedlich stark durch die Einstellung des mindestens einen Steuersignals beeinflussbar sein. Daher kann mindestens ein Sensibilitätsfaktor vorgegeben werden, der angibt, wie das mindestens eine Steuersignal mit den Daten der Profilüberwachungsvorrichtung und/oder der Prozessüberwachungsvorrichtung korreliert. Der mindestens eine Sensibilitätsfaktor kann also einen Zusammenhang zwischen dem mindestens einen Steuersignal auf der einen Seite und dem mindestens einen Profilparameter und/oder dem mindestens einen Prozessparameter auf der anderen Seite angeben.

Der mindestens eine Sensibilitätsfaktor kann manuell, automatisch oder durch Expertenwissen vorgegeben werden. Insbesondere kann der mindestens eine Sensibilitätsfaktor im Betrieb aktualisierbar sein. Beispielsweise kann die Steuervorrichtung dazu eingerichtet sein, aus der Auswirkung einer Änderung des mindestens einen Steuersignals auf den mindestens einen Prozessparameter und/oder den mindestens einen Profilparameter mindestens einen optimierten Sensibilitätsfaktor zu errechnen. Insofern kann die Steuervorrichtung lernfähig sein.

In einer Ausführungsform weist die Steuervorrichtung ein Mittel zum maschinellen Lernen auf, das automatisch ein Modell, insbesondere für die Mehrgrößenregelung, zur Ermittlung der Zusammenhänge zwischen dem mindestens einen Profilparameter, dem mindestens einen Prozessparameter und der mindestens einen Stellgröße ermittelt. Insbesondere kann das Mittel zum maschinellen Lernen den mindestens einen Sensibilitätsfaktor ermitteln.

Der mindestens eine Sensibilitätsfaktor kann beispielsweise über das folgende Verfahren ermittelbar sein: In einem ersten Schritt wird die Extrusionsvorrichtung am Betriebspunkt mit einem ersten Wert der mindestens einen Stellgröße betrieben und ein erster Satz Daten der Profilüberwachungsvorrichtung und/oder der Prozessüberwachungsvorrichtung gesammelt. In einem zweiten Schritt wird die Extrusionsvorrichtung mit einem zweiten Wert der mindestens einen Stellgröße betrieben, der sich von dem ersten Wert unterscheidet, und ein zweiter Satz Daten der Profilüberwachungsvorrichtung und/oder der Prozessüberwachungsvorrichtung gesammelt. Gegebenenfalls wird der zweite Schritt mehrmals wiederholt, wobei der zweite Wert über oder unter dem ersten Wert sein kann und insbesondere regelbasiert variiert wird. In einem dritten Schritt wird aus dem ersten Satz und dem mindestens einen zweiten Satz Daten ein Zusammenhang zwischen der mindestens einen Stellgröße und den Daten bestimmt. Der Zusammenhang kann eine Stärke einer Korrelation zwischen der mindestens einen Stellgröße und dem mindestens einen Prozessparameter und/oder dem mindestens einen Profilparameter umfassen.

Der Zusammenhang kann beispielsweise durch eine Koeffizientenmatrix ausgedrückt werden, die jeder Kombination von der mindestens einen Stellgröße mit dem mindestens einen Profilparameter und/oder dem mindestens einen Prozessparameter eine Korrelationsstärke zuordnet. Beispielsweise kann die Ausstoßleistung des Extruders bei konstantem Profilgewicht positiv mit der Bombierung korrelieren, während die Abzugsgeschwindigkeit negativ mit der Bombierung und kaum mit der Belastung des Antriebs des Extruders korreliert.

Der mindestens eine Sensibilitätsfaktor kann also eine Koeffizientenmatrix sein, die angibt, wie sich der mindestens eine Prozessparameter und/oder der mindestens eine Profilparameter, also insbesondere die Qualität des Kunststoffprofils, ändert, sobald die mindestens eine Stellgröße, also insbesondere ein Fahrparameter, geändert wird.

Durch das Mittel zum maschinellen Lernen kann der mindestens eine Sensibilitätsfaktor im Betrieb der Extrusionsvorrichtung weiter anpassbar sein, um genauer vorhersagen zu können, wie sich der mindestens eine Prozessparameter und/oder der mindestens eine Profilparameter ändert, sobald die mindestens eine Stellgröße geändert wird.

In einer Ausführungsform ist ein Simulationssystem vorgesehen, mit dem eine Auswirkung einer Änderung des mindestens einen Steuersignals auf den mindestens einen Profilparameter und/oder den mindestens einen Prozessparameter simulierbar ist. Das Simulationssystem kann dazu eingerichtet sein, den mindestens einen Sensibilitätsfaktor durch eine Simulation zu bestimmen und an die Steuervorrichtung zu übermitteln.

In einer Ausführungsform ist die Steuervorrichtung dazu eingerichtet, im Betrieb unter Nutzung des mindestens einen Sensibilitätsfaktors die mindestens eine Stellgröße zu bestimmen, um mindestens einen gewünschten Profilparameter und/oder mindestens einen gewünschten Prozessparameter zu erreichen. Die mindestens eine Stellgröße kann insbesondere aus mindestens einer aktuellen Stellgröße, insbesondere aktuellen Fahrparametern, und aus dem mindestens einen Profilparameter und/oder dem mindestens einen Prozessparameter, insbesondere aktuellen Qualitätswerten, bestimmbar sein. Es können also optimierte Fahrparameter, die optimierte Qualitätswerte hervorbringen, aus aktuellen Fahrparametern und aktuellen Qualitätswerten auf Grundlage eines Wissens über den Zusammenhang zwischen einer Fahrparameteränderung und einer Änderung der Qualitätswerte bestimmt werden.

In einer Ausgestaltung ist die Steuervorrichtung dazu eingerichtet, ein gewünschtes Intervall für den mindestens einen Profilparameter und/oder den mindestens einen Prozessparametervorzugeben. Die Steuervorrichtung kann insbesondere ein Mittel zur Durchführung einer mathematischen Optimierung eines Satzes von Stellgrößen unter mindestens einer Nebenbedingung bezüglich eines Wertes des mindestens einen Profilparameters, des mindestens einen Prozessparameters und/oder der mindestens einen Stellgröße des Satzes von Stellgrößen aufweisen. Die mindestens eine Nebenbedingung kann beispielsweise als eine Penalty-Funktion ausdrückbar sein.

Die Steuervorrichtung kann eine mathematische Optimierung der mindestens einen Stellgröße oder eines Satzes von Stellgrößen beispielsweise unter der Bedingung vornehmen, dass der mindestens eine Profilparameter, der mindestens eine Prozessparameter, mindestens eine weitere Stellgröße und/oder mindestens eine Stellgröße des Satzes von Stellgrößen in einem gewünschten Intervall liegt.

Bei Optimierung eines Satzes von Stellgrößen mit mindestens einer Stellgröße und mindestens einer weiteren Stellgröße soll beispielsweise die mindestens eine weitere Stellgröße in einem gewünschten Intervall liegen. Die mindestens eine weitere Stellgröße kann dann mit einer 1 zu 1 Beziehung zu sich selbst in die Optimierung einbezogen werden.

Grundsätzlich kann die Beziehung zwischen der zu optimierenden mindestens einen Stellgröße und dem mindestens einen Profilparameter und/oder dem mindestens einen Prozessparameter durch den mindestens einen Sensibilitätsfaktor vorgegeben sein.

Die Steuervorrichtung kann zur mathematischen Optimierung ein Verfahren zur Optimierung mit mindestens einer Nebenbedingung verwenden. Die Nebenbedingung kann beispielsweise als Penalty-Funktion vorgegeben werden. Die Penalty-Funktion kann symmetrisch sein. Beispielsweise zur Integration von Gewichts- und/oder Wandstärkenoptimierung des Kunststoffprofils kann die Penalty-Funktion ebenso asymmetrisch sein. Die Penalty-Funktion kann beispielsweise eine Sigmoidfunktion, insbesondere die Funktion p_a(x)=1/(1+e^-x) beinhalten.

In einer Ausführung ist eine Reinigungsvorrichtung vorgesehen, die dazu eingerichtet ist, ein Reinigungsmittel in die Kalibriervorrichtung einzubringen, um insbesondere weiche Ablagerungen zu entfernen, die sich mit der Zeit - abhängig von der Materialzusammensetzung des extrudierten Kunststoffprofils - an der Stahloberfläche im Inneren der Kalibriervorrichtung ansammeln. Diese Ablagerungen führen mit zunehmender Produktionsdauer zu einer Verschlechterung der Oberflächenqualität des extrudierten Kunststoffprofils, stören aber auch den Extrusionsprozess an sich, beispielsweise durch ein Klebenbleiben des Kunststoffprofils an der Ablagerung und somit Hängenbleiben bestimmter Profilsektionen, wodurch Ausschuss und Produktionsstillstände verursacht werden.

Die Reinigungsvorrichtung kann beispielsweise durch die Steuervorrichtung gesteuert werden, insbesondere kann sie zeitlich und mengenmäßig automatisch geregelt und / oder von einem Bediener manuell gesteuert werden. Das Reinigungsmittel kann automatisch und/oder in vordefinierten Abständen eingebracht werden. Das Reinigungsmittel kann flüssig oder gasförmig sein.

Das Reinigungsmittel kann z.B. auf das Kunststoffprofil aufgesprüht werden, wobei es sich dann in den Spalt zwischen Kalibriervorrichtung und Kunststoffprofil hineinzieht. Es kann aber auch auf Kalibriervorrichtung und/oder in einen Fließkanal eingebracht werden.

Durch die Bewegung des Kunststoffprofils in Extrusionsrichtung wird das Reinigungsmittel in die Kalibriervorrichtung eingebracht/eingezogen und reinigt dort die Stahloberfläche im Inneren der Kalibriervorrichtung.

Die Reinigungsvorrichtung kann in einer Ausführungsform mindestens eine Flachstrahldüse aufweisen, mit der geringe Mengen an Reinigungsmittel mit wenig Druck fein zerstäubt werden, so dass kein Schaden am Kunststoffprofil und somit auch kein Ausschuss während des Reinigungsvorganges entsteht.

Eine möglichst flache Ausführung der Flachstrahldüse ermöglicht eine flexible Platzierung in dem engen Spalt zwischen Düse und Kalibriervorrichtung. Eine Abschrägung am Sprühdüsenausgang lenkt den Sprühstrahl in Richtung der Kalibriervorrichtung, nicht aber in Richtung der Düse, um eine negative Beeinflussung dieser zu vermeiden. Das Sprühen ermöglicht ein Aufbringen des Reinigungsmittels auf das Kunststoffprofil aus allen Winkeln (von unten/von oben/von der Seite). Die Reinigungsvorrichtung kann verschraubt und/oder magnetisch an der Kalibriervorrichtung befestigt werden. Die Reinigungsvorrichtung kann auch direkt in der Kalibrierung integriert sein.

In einer Ausgestaltung wird auf ein Signal von der Steuereinheit hin eine automatische Reinigung der Vorrichtungen, insbesondere der Kalibriervorrichtungen durchgeführt. Ebenso kann die Belagsmesseinrichtung mit der Reinigungsvorrichtung gekoppelt sein, um eine Reinigung der Vorrichtung, insbesondere der Kalibriervorrichtungen oder von Werkzeugen der Extrusionsvorrichtung in Abhängigkeit eines gemessenen Grades an Verschmutzung auszulösen.

Die Reinigungsvorrichtung kann das Reinigungsmittel aufbringen oder auftragen, insbesondere aufsprühen.

Insbesondere kann das Reinigungsmittel als dünner Film auf die Oberfläche des Kunststoffprofils aufgebracht werden, insbesondere mittels Schlitzen oder Taschen in der Kalibriervorrichtung, so dass das Reinigungsmittel durch Schleppströmung vom Kunststoffprofil mittransportierbar ist. Damit kann eine effiziente Reinigung erreicht werden.

Wie erwähnt, kann das Reinigungsmittel z.B. mit einer Düse wie einer Flachstrahldüse aufgebracht werden. Es ist aber alternativ oder zusätzlich auch möglich, dass das Reinigungsmittel der Reinigungsvorrichtung durch eine poröse Oberfläche, insbesondere durch einen porösen Sintereinsatz in der Kalibriervorrichtung auf das Kunststoffprofil aufbringbar ist.

Dabei kann es sinnvoll sein, dass das Reinigungsmittel gezielt auf eine einwandige, insbesondere abstehende Profilsektion des Kunststoffprofils oder den gesamten Profilumfang abgebbar ist.

Eine verbesserte Reinigungswirkung kann erreicht werden, wenn das Reinigungsmittel intervallweise aufbringbar ist. Die Steuerungsvorrichtung kann die Intervallzeiten und die Mengen steuern.

Des Weiteren wird die Aufgabe durch ein Verfahren mit den Merkmalen des Anspruchs 23 gelöst.

Die Aufgabe wird auch durch eine Einziehvorrichtung mit den Merkmalen des Anspruchs 24 gelöst. Zum Anfahren eines neuen Kunststoffprofils kann die Einziehvorrichtung entgegen der Extrusionsrichtung in eine Extrusionsvorrichtung eingeschoben werden. Die Einziehvorrichtung kann mindestens ein Zugmittel wie eine gegebenenfalls kraftoptimierte Einziehstange, einen Einziehgurt, ein Federstahlband und/oder ein Seil aufweisen. Insbesondere sind Kombinationen von Zugmitteln denkbar und möglich. Das Verwenden des mindestens einen Zugmittels ermöglicht ein Einleiten einer Zugkraft in das Kunststoffprofil bereits beim Austreten aus einer Extrusionsdüse der Extrusionsvorrichtung. Die Zugkraft zum Kalibrieren kann somit sofort aufgenommen werden. Die Einziehvorrichtung kann ein Anschlusselement zum Anschluss an das Kunststoffprofil aufweisen. Das Kunststoffprofil kann nach dem Austritt aus der Extrusionsdüse mit dem Anschlusselement verbunden werden. Das Anschlusselement kann über ein Kopplungselement mit dem mindestens einen Zugmittel verbunden sein. Insbesondere kann das Anschlusselement eine Klemmvorrichtung sein. Das Anschlusselement kann von dem Kopplungselement abnehmbar oder entkoppelbar sein. Nach dem Verbinden des Anschlusselements mit dem Kunststoffprofil kann der Anfahrprozess gestartet werden. Mit der Einziehvorrichtung kann das Kunststoffprofil durch die gesamte Extrusionsvorrichtung, insbesondere umfassend eine Kalibriervorrichtung, eine Abzugsvorrichtung sowie eine Ablängvorrichtung, gezogen werden.

Das Anschlusselement kann dazu ausgebildet sein, das Kunststoffprofil zu kühlen. Das Anschlusselement kann beispielsweise metallisch sein, um das Kunststoffprofil ausreichend vorzukühlen. Insbesondere kann das Anschlusselement aus Aluminium oder Messing gefertigt sein. Das Anschlusselement kann durch ein 3D-Druckverfahren hergestellt werden.

Das Anschlusselement kann einen Anschlussabschnitt zum Verbinden mit dem Kunststoffprofil aufweisen. Das Anschlusselement kann mit dem Kunststoffprofil formschlüssig und/oder kraftschlüssig verbunden sein. Beispielsweise kann das Anschlusselement eine Verzahnung aufweisen, die formschlüssig in das Kunststoffprofil eingreift. Insbesondere kann das Anschlusselement zangenartig ausgebildet sein. Das Kunststoffprofil kann in einem Maul des Anschlusselements formschlüssig und/oder kraftschlüssig festgelegt sein. Die Verzahnung kann an dem Maul angeordnet sein. In einer Ausgestaltung ist die Verzahnung schräg zur Extrusionsrichtung angeordnet, so dass die Verzahnung das Kunststoffprofil in Zugrichtung fixiert. Wenn keine Zugkraft anliegt, kann das Anschlusselement durch einfache Öffnung des Mauls von dem Kunststoffprofil ablösbar sein. Insbesondere kann das Maul zwei Klemmbacken aufweisen, zwischen denen das Kunststoffprofil einklemmbar ist.

Das Anschlusselement kann weiterhin einen Kopplungsabschnitt zur Verbindung mit dem Kopplungselement aufweisen. Der Kopplungsabschnitt kann zur form- und/oder kraftschlüssigen Verbindung dem Kopplungselement ausgebildet sein. Insbesondere kann der Kopplungsabschnitt zwei Zangengriffe, die zur Betätigung der Klemmbacken an dem Anschlusselement vorgesehen sind, aufweisen. Vorsprünge an den Zangengriffen können in einer geschlossenen Stellung, in der das Kunststoffprofil mit den Klemmbacken einklemmbar ist, zur Ausbildung einer Ausnehmung aneinander anliegen. Das Kopplungselement kann einen Vorsprung aufweisen, an dem die Ausnehmung zur formschlüssigen Verbindung festlegbar ist. In einer offenen Stellung des Anschlusselements können die Vorsprünge getrennt sein, so dass das Anschlusselement nur in einer geschlossenen Stellung mit dem Kopplungselement verbindbar ist.

Das mindestens eine Zugelement kann an einem Wickelelement gewickelt oder einer Aufrollvorrichtung der Einziehvorrichtung gerollt werden, um das Kunststoffprofil durch die Extrusionsvorrichtung zu ziehen.

Im Folgenden wird ein automatisierter Anfahrprozess beschrieben. Nach dem Abbauen eines Extrusionswerkzeuges und Wiederaufbauen eines neuen Werkzeuges auf einer Extrusionslinie ist nicht unbedingt sichergestellt, dass eine Relativposition zwischen Extrusionsdüse und Trockenkalibrierung ausreichend genau reproduziert werden kann. Eine Positioniereinrichtung kann vorgesehen sein, um eine, insbesondere automatische, exakte und reproduzierbare, Ermittlung und/oder Herstellung der Relativposition zwischen Extrusionsdüse und Kalibriervorrichtung zu ermöglichen. Die Positioniereinrichtung kann eine mechanische Einrichtung sein. Die Positionierung kann insbesondere mittels Sensoren erfolgen. Beispielsweise kann die Positioniereinrichtung mindestens einen Sensor umfassen. Die Positioniereinrichtung kann beispielsweise einen Taststift, einen Tastkegel und/oder Lasermesstechnik aufweisen. Weitere Sensoren können den richtigen Aufbau der Extrusionsdüse und / oder der Trockenkalibrierung detektieren und gegebenenfalls melden.

In einer Ausgestaltung wird der mindestens eine Prozessparameter für den Anfahrprozess automatisch eingestellt. Der mindestens eine Prozessparameter kann insbesondere eines oder mehrere von einem Vakuum in der Nasskalibrierung, einer Geschwindigkeit in der Abzugsvorrichtung, einem Anpressdruck in der Abzugsvorrichtung, einer Drehzahl der Extrusionsschnecken und/oder eine Temperatur in der Kalibriervorrichtung sein.

Mittels eines Profilvermessungssystems kann eine Position von Innenstegen des Kunststoffprofils gemessen werden. Das Profilvermessungssystem kann zwischen der Nasskalibrierung und der Abzugsvorrichtung oder (zusätzlich oder optional) stromabwärts der Abzugsvorrichtung angeordnet sein. Es an dem Profilvermessungssystem können Sensoren und/oder Ventile vorgesehen sein, die eine Stützluft in der Extrusionsdüse regeln. Definierte Luftvolumenströme können in bestimmte Profilhohlkammern eingeblasen werden, um insbesondere beim Anfahren Innenstege, die verklebt sind, zu lösen und / oder um in-line eine Maßhaltigkeit eines Innenlebens des Kunststoffprofils zu gewährleisten.

Sobald sich der mindestens eine Profilparameter und/oder der mindestens eine Prozessparameter, insbesondere alle Profil- und Prozessparameter, innerhalb einer vorgegebenen Toleranz befinden und/oder das Profil als gut bewertet wird, kann automatisch oder über ein Signal von einem Bediener eine virtuelle Profilmarkierung über die Steuervorrichtung gesetzt und beispielsweise über ein Display der Steuervorrichtung zum Anzeigen von Informationen visualisiert werden. Mittels der Ablängvorrichtung wird an dieser Stelle automatisch ein Profilmuster von dem Kunststoffprofil abgesägt. Über die Abzugsgeschwindigkeit kann berechnet werden, wann diese virtuelle Profilmarkierung die Ablängvorrichtung erreicht. Die virtuelle Profilmarkierung kann beispielsweise eine Zeit t umfassen, die das markierte Profil bis zur Ablängvorrichtung zurücklegt. Die Zeit t kann über eine Abzugsgeschwindigkeit v_a, mit der das Kunststoffprofil durch die Extrusionsvorrichtung gezogen wird, und einer bekannten Strecke s_b, die das Kunststoffprofil vom Setzen der virtuellen Profilmarkierung bis zur Ablängvorrichtung zurücklegt mit Hilfe der Formel t = s_b/v_a berechnet werden. Der Anfahrprozess kann mit dem Absägen des Profilmusters enden. Danach kann die Produktion aufgenommen werden.

In einer Ausgestaltung ist eine Kraftmesseinrichtung in der Abzugsvorrichtung vorgesehen, die die Abzugskraft misst und/oder ein Rutschen des Kunststoffprofils in der Abzugsvorrichtung erkennt. Die Kraftmesseinrichtung kann dazu eingerichtet sein, den Anpressdruck entsprechend anzupassen. In einer Variante ist die Kraftmesseinrichtung mit der Steuervorrichtung gekoppelt, um die gemessenen Werte der Abzugskraft und/oder einen Rutschwert an die Steuervorrichtung zu übermitteln. Die Steuervorrichtung kann dazu eingerichtet sein, den Anpressdruck auf Basis eine vorgegebenen oder mittels Messeinrichtung in-line gemessenen Reibungskoeffizienten und der gemessenen Abzugskraft entsprechend anzupassen.

In einer Ausgestaltung ist eine Belagsmesseinrichtung innerhalb der Kalibriervorrichtung, vorgesehen, die dazu eingerichtet ist, Beläge zu erkennen, die durch den Abrieb von Extrudat und / oder in Wechselwirkung mit der Umgebung (Wasser / Luft) an der Kalibrierung anhaften. In einer Variante ist die Belagsmesseinrichtung mit der Steuervorrichtung gekoppelt, um einen gemessenen Grad an Belägen an die Steuervorrichtung zu übermitteln.

Insbesondere umfasst die vorliegende Erfindung folgende Aspekte:
Ein erster Aspekt betrifft eine Extrusionsvorrichtung für ein Kunststoffprofil, insbesondere ein Hohlkammerprofil, mit einem Extruder, einer am Ausgang des Extruders angeordneten Extrusionsdüse zur Formung des Kunststoffprofils, wobei das Kunststoffprofil anschließend durch eine Kalibriervorrichtung geführt wird, einer nachgeschalteten Abzugsvorrichtung für das Kunststoffprofil und einer Ablängvorrichtung zur Abtrennung von Teilen des extrudierten Kunststoffprofils. Eine Profilüberwachungsvorrichtung ist zur Erfassung mindestens eines Profilparameters des Kunststoffprofils in Extrusionsrichtung nach dem Austreten aus der Extrusionsdüse vorgesehen und / oder es ist eine Prozessüberwachungsvorrichtung zur Erfassung mindestens eines Prozessparameters im und / oder vor dem Extruder, der Extrusionsdüse, der Kalibriervorrichtung, der Abzugsvorrichtung und / oder der Ablängvorrichtung vorgesehen, wobei die Daten der Profilüberwachungsvorrichtung und / oder der Prozessüberwachungsvorrichtung durch eine Steuervorrichtung dazu verwendbar sind, mindestens eine Stellgröße oder einen Satz von Stellgrößen am Extruder, an der Extrusionsdüse, an der Kalibriervorrichtung, an der Abzugsvorrichtung und / oder an der Ablängvorrichtung in Abhängigkeit von den Daten einzustellen.

Gemäß einem zweiten Aspekt, der den ersten Aspekt weiter ausgestaltet, ist der mindestens eine Profilparameter mindestens eine Wanddicke des Kunststoffprofils, mindestens ein Parameter betreffend die Oberflächengüte, insbesondere die Farbe, der Glanz, und/oder die Streifigkeit des Kunststoffprofils, mindestens ein Parameter der Formabweichung des Kunststoffprofils von einer vorgegebenen Form ist, insbesondere ein Krümmungsparameter und / oder ein Winkelparameter ist, mindestens eine Hauptwandstärke des Kunststoffprofils und / oder mindestens ein Metergewicht des Kunststoffprofils.

Gemäß einem dritten Aspekt, der den ersten Aspekt weiter ausgestaltet, ist eine optische Erfassungsvorrichtung für Wanddicken des Kunststoffprofils, für die Oberflächengüte des Kunststoffprofils und / oder die Formabweichung des Kunststoffprofils vorgesehen.

Gemäß einem vierten Aspekt, der den ersten Aspekt weiter ausgestaltet, ist der mindestens eine Prozessparameter mindestens eine Motorbelastung des Extruders, mindestens eine geometrische Ausrichtung der Kalibriervorrichtung und / oder der Abzugsvorrichtung auf die Extrusionsdüse; mindestens eine Temperatur und / oder ein Druck im Extruder, in der Extrusionsdüse, in der Kalibriervorrichtung und / oder in der Abzugsvorrichtung, mindestens eine Kraftmessung an der Abzugsvorrichtung und / oder eine Messung der Abzugsgeschwindigkeit und / oder mindestens eine Längenmessung und / oder eine Wiegung an der Ablängvorrichtung.

Gemäß einem fünften Aspekt, der den ersten Aspekt weiter ausgestaltet, ist die mindestens eine Stellgröße am Extruder die Mischungseinstellung mindestens eines des dem Extruder zugeführten Kunststoffs, die Temperatur und / oder eine Drehzahl der Extrusionsschnecken.

Gemäß einem sechsten Aspekt, der den ersten Aspekt weiter ausgestaltet, ist die mindestens eine Stellgröße an der Extrusionsdüse eine Temperatur, die durch eine Temperiervorrichtung einstellbar ist, insbesondere lokal auf einen Bereich des Kunststoffprofils einstellbar ist.

Gemäß einem siebten Aspekt, der den sechsten Aspekt weiter ausgestaltet, ist die mindestens eine Stellgröße ein Fluidstrom, der mindestens einen Teil des Kunststoffprofils innerhalb der Extrusionsdüse und / oder außerhalb der Extrusionsdüse temperiert.

Gemäß einem achten Aspekt, der den ersten Aspekt weiter ausgestaltet, ist die mindestens eine Stellgröße an der Kalibriervorrichtung eine Temperatur und / oder ein Druck, in einer Trocken- und / oder Nasskalibrierung und / oder eine Wasserdurchflussmenge in einer Nasskalibrierung.

Gemäß einem neunten Aspekt, der den ersten Aspekt weiter ausgestaltet, ist die mindestens eine Stellgröße an der Kalibriervorrichtung eine Positionierungsänderung mindestens einer Trockenkalibriervorrichtung in Bezug auf die Extrusionsdüse.

Gemäß einem zehnten Aspekt, der den ersten Aspekt weiter ausgestaltet, ist die mindestens eine Stellgröße an der Abzugsvorrichtung eine Abzugsgeschwindigkeit und / oder Abzugskraft.

Gemäß einem elften Aspekt, der den ersten Aspekt weiter ausgestaltet, ist der mindestens eine in-line erfasste Profilparameter und / oder Prozessparameter durch die Steuervorrichtung automatisch zur Einstellung mindestens eines Steuersignals verwendbar oder wird einer Bedienperson ein Vorschlag für eine Fahrweise der Extrusionsvorrichtung übermittelt.

Gemäß einem zwölften Aspekt, der den ersten Aspekt weiter ausgestaltet, weist die Steuervorrichtung ein Mittel zur Mehrgrößenregelung auf, wobei die erfassten Profilparameter und / oder die erfassten Prozessparameter als Eingangsgrößen dienen.

Gemäß einem 13. Aspekt, der den ersten Aspekt weiter ausgestaltet, weist die Steuervorrichtung ein Mittel zum maschinellen Lernen auf, das automatisch ein Modell, insbesondere für die Mehrgrößenregelung, zur Ermittlung der Zusammenhänge zwischen dem mindestens einen Profilparameter, dem mindestens einen Prozessparameter und der mindestens einen Stellgröße ermittelt.

Gemäß einem 14. Aspekt, der den ersten Aspekt weiter ausgestaltet, weist die Steuervorrichtung ein Mittel zur Durchführung einer mathematischen Optimierung eines Satzes von Stellgrößen unter mindestens einer Nebenbedingung bezüglich eines Wertes des mindestens einen Profilparameters, des mindestens einen Prozessparameters und/oder der mindestens einen Stellgröße des Satzes von Stellgrößen auf.

Gemäß einem 15. Aspekt, der den vierzehnten Aspekt weiter ausgestaltet, ist die mindestens eine Nebenbedingung als eine Penalty-Funktion ausdrückbar.

Gemäß einem 16. Aspekt, der den ersten Aspekt weiter ausgestaltet, ist mindestens eine Reinigungsvorrichtung zur Abgabe eines Reinigungsmittels, insbesondere durch eine Flachstrahldüse vorgesehen.

Gemäß einem 17. Aspekt, der den 16. Aspekt weiter ausgestaltet, wird die Abgabe des Reinigungsmittels durch die Steuervorrichtung gesteuert oder geregelt.

Gemäß einem 18. Aspekt, der den 16. Aspekt weiter ausgestaltet, wird das Reinigungsmittel aufgebracht oder aufgetragen, insbesondere gesprüht.

Gemäß einem 19. Aspekt, der den 16. Aspekt weiter ausgestaltet, ist das Reinigungsmittel mit der Reinigungsvorrichtung als dünner Film auf die Oberfläche des Kunststoffprofils aufbringbar, insbesondere mittels Schlitzen oder Taschen in der Kalibriervorrichtung, so dass das Reinigungsmittel durch Schleppströmung vom Kunststoffprofil mittransportierbar ist.

Gemäß einem 20. Aspekt, der den 16. Aspekt weiter ausgestaltet, ist das Reinigungsmittel der Reinigungsvorrichtung durch eine poröse Oberfläche, insbesondere durch einen porösen Sintereinsatz in der Kalibriervorrichtung, abgebbar.

Gemäß einem 21. Aspekt, der den 16. Aspekt weiter ausgestaltet, ist das Reinigungsmittel gezielt auf eine einwandige, insbesondere abstehende Profilsektion des Kunststoffprofils oder den gesamten Profilumfang abgebbar.

Gemäß einem 22. Aspekt, der den 16. Aspekt weiter ausgestaltet, ist das Reinigungsmittel intervallweise aufbringbar.

Gemäß einem 23. Aspekt ist ein Extrusionsverfahren für ein Kunststoffprofil, insbesondere ein Hohlkammerprofil, vorgesehen mit einem Extruder, einer am Ausgang des Extruders angeordneten Extrusionsdüse zur Formung des Kunststoffprofils, wobei das Kunststoffprofil anschließend durch eine Kalibriervorrichtung geführt wird, einer nachgeschalteten Abzugsvorrichtung für das Kunststoffprofil und einer Ablängvorrichtung zur Abtrennung von Teilen des extrudierten Kunststoffprofils. Folgendes ist hierbei vorgesehen:
a) eine Erfassung mindestens eines Profilparameters des Kunststoffprofils in Extrusionsrichtung nach dem Austreten aus der Extrusionsdüse durch eine Profilüberwachungsvorrichtung und / oder eine Erfassung mindestens eines Prozessparameters im und / oder vor dem Extruder, der Extrusionsdüse, der Kalibriervorrichtung, der Abzugsvorrichtung und / oder der Ablängvorrichtung durch eine Prozessüberwachungsvorrichtung, wobei
b) die Daten der Profilüberwachungsvorrichtung und / oder der Prozessüberwachungsvorrichtung durch eine Steuervorrichtung dazu verwendet werden, mindestens eine Stellgröße am Extruder, an der Extrusionsdüse, an der Kalibriervorrichtung, an der Abzugsvorrichtung und / oder an der Ablängvorrichtung in Abhängigkeit von den Daten einzustellen.

Gemäß einem 24. Aspekt ist eine Einziehvorrichtung für eine Extrusionsvorrichtung für ein Kunststoffprofil, insbesondere ein Hohlkammerprofil, vorgesehen mit einem Extruder, einer am Ausgang des Extruders angeordneten Extrusionsdüse zur Formung des Kunststoffprofils und mindestens einer weiteren Vorrichtung, die dem Extruder in einer Extrusionsrichtung nachgeordnet ist, zum Einziehen des Kunststoffprofils in die mindestens eine weitere Vorrichtung, mit mindestens einem Zugmittel und einem Anschlusselement zum Anschluss an das Kunststoffprofil, wobei an dem mindestens einen Zugmittel ein Kopplungselement angeordnet ist, über das das Anschlusselement lösbar mit dem mindestens einen Zugmittel verbunden ist.

Gemäß einem 25. Aspekt, der den 24. Aspekt weiter ausgestaltet, ist das Anschlusselement als eine Klemmvorrichtung zum Anschließen an das Kunststoffprofil durch Einklemmen des Kunststoffprofils und/oder Anklammern an das Kunststoffprofil ausgebildet.

Gemäß einem 26. Aspekt, der den 24. Aspekt weiter ausgestaltet, ist das Anschlusselement dazu ausgebildet, das Kunststoffprofil zu kühlen.

Gemäß einem 27. Aspekt, der den 24. Aspekt weiter ausgestaltet, ist ein Wickelelement vorgesehen, an dem das mindestens eine Zugmittel aufwickelbar.

Gemäß einem 28. Aspekt, der den 24. Aspekt weiter ausgestaltet, ist das mindestens eine Zugmittel ein flexibles Zugmittel.

Gemäß einem 29. Aspekt, der den 24. Aspekt weiter ausgestaltet, ist das mindestens eine Zugmittel ein starres Zugmittel.

Gemäß einem 30. Aspekt, der den 24. Aspekt weiter ausgestaltet, sind mindestens zwei Zugmittel vorgesehen, von denen ein erstes Zugmittel ein flexibles Zugmittel ist und ein zweites Zugmittel ein starres Zugmittel ist.

Gemäß einem 31. Aspekt, der den 30. Aspekt weiter ausgestaltet, ist das starre Zugmittel an dem Kopplungselement angeordnet und das flexible Zugmittel an dem starren Zugmittel angeordnet, so dass das starre Zugmittel mit dem flexiblen Zugmittel durch die mindestens eine weitere Vorrichtung ziehbar ist.

Gemäß einem 32. Aspekt, der den 25. Aspekt weiter ausgestaltet, ist das Kopplungselement mit dem Anschlusselement formschlüssig und/oder kraftschlüssig verbunden.

Gemäß einem 33. Aspekt, der den 32. Aspekt weiter ausgestaltet, ist das Anschlusselement zum Anschließen an das Kunststoffprofil zwischen einer offenen Stellung und einer geschlossenen Stellung verstellbar, wobei das Anschlusselement insbesondere nur in der geschlossenen Stellung mit dem Kopplungselement verbindbar ist.

Gemäß einem 34. Aspekt, der den 25. Aspekt weiter ausgestaltet, fixiert das Anschlusselement das Kunststoffprofil über eine Verzahnung formschlüssig und/oder kraftschlüssig.

Gemäß einem 35. Aspekt ist eine Positioniereinrichtung für eine Extrusionsvorrichtung, zur Ermittlung und/oder Herstellung einer Relativposition zwischen einer Extrusionsdüse der Extrusionsvorrichtung und einer Kalibriervorrichtung der Extrusionsvorrichtung vorgesehen, wobei eine mechanische Einrichtung zur Herstellung der Relativposition und/oder eine Sensoreinrichtung zur Ermittlung der Relativposition vorgesehen ist.

Gemäß einem 36. Aspekt, der den 35. Aspekt weiter ausgestaltet, weist die Sensoreinrichtung einen Taststift, einen Tastkegel und/oder Lasermesstechnik auf.

Gemäß einem 37. Aspekt ist eine Kalibriervorrichtung zum Kalibrieren eines Kunststoffprofils mit einem Durchlass vorgesehen, durch den das Kunststoffprofil durch die Kalibriervorrichtung hindurch tritt, wobei zwischen dem Kunststoffprofil und einer inneren Oberfläche des Durchlasses ein Spalt ausgebildet ist. Die Kalibriervorrichtung ist dazu ausgebildet und eingerichtet, ein gasförmiges Medium in den Spalt zu leiten, wobei ein Staudruck des gasförmigen Mediums abhängig von einer Größe des Spaltes ist.

Anhand von beispielhaften Ausführungsformen werden die Überwachungsvorrichtung und das Überwachungssystem anhand von Figuren beschrieben. Dabei zeigt
- Fig. 1: eine schematische Darstellung einer Extrusionsvorrichtung mit einer Steuervorrichtung;
- Fig. 2A und 2B: Schnittansichten einer Kalibriervorrichtung;
- Fig. 3: grafische Darstellung einer symmetrischen Penalty-Funktion;
- Fig. 4: grafische Darstellung einer asymmetrischen Penalty-Funktion;
- Fig. 5: eine Ansicht einer Einziehvorrichtung;
- Fig. 6: eine Ansicht eines Anschlusselements;
- Fig. 7: eine Ansicht einer Einziehvorrichtung, die an einer Extrusionsvorrichtung angeordnet ist;
- Fig. 8: eine Ansicht eines Kopplungselements;
- Fig. 9: Ansicht einer Ausgestaltung eines Einschiebelements;
- Fig. 10: Ansichten einer Ausgestaltung eines Einschiebelements;
- Fig. 11: Ansichten einer Ausgestaltung eines Anschlusselements;
- Fig. 12: Querschnitt durch eine Kalibriervorrichtung, durch die eine Einziehvorrichtung gezogen wird; und
- Fig. 13: eine Ansicht einer Ausgestaltung eines Kopplungselements;
- Fig. 14: zeigt eine schematische Darstellung einer Reinigungsvorrichtung mit einer Flaschstrahldüse;
- Fig. 15: zeigt ein Bauelement mit zwei Reinigungsvorrichtungen;
- Fig. 16: zeigt eine Schnittansicht mit zwei Bauelementen mit vier Reinigungsvorrichtungen.

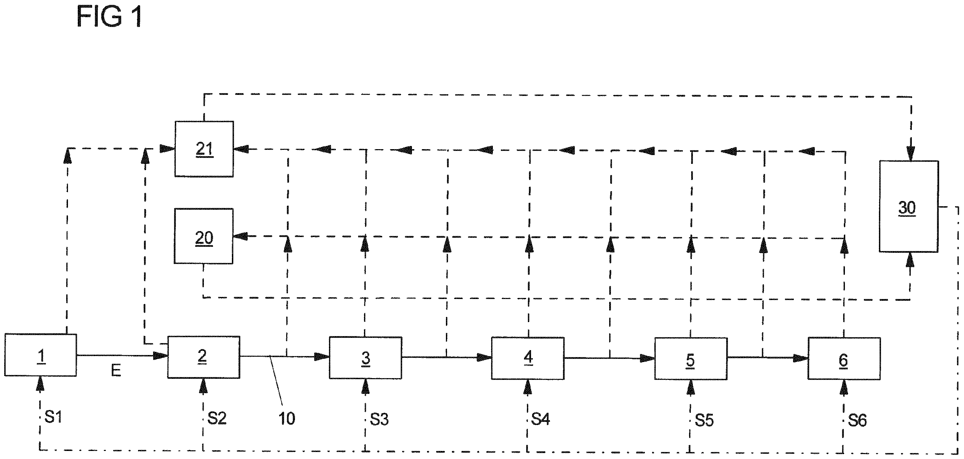

In Fig. 1 ist der schematische Aufbau einer an sich bekannten Extrusionsvorrichtung dargestellt, wobei die Extrusionsrichtung E hier von links nach rechts verläuft.

Aus einem Extruder 1wird eine homogene Schmelze in einer einstellbaren Menge mit der nötigen Temperatur in die nachfolgende Extrusionsdüse 2 gefördert. Im Extruder wird z.B. Kunststoffgranulat (ein oder auch mehrere Kunststoffsorten) aufgeschmolzen, wobei die plastische, hoch-viskose Kunststoffschmelze durch Extruderschnecken in Richtung Extrusionsdüse 2 gefördert wird.

Die Extrusionsdüse 2 formt die unter Druck angelieferte homogene Kunststoffschmelze zu der gewünschten Querschnittsform, nämlich einem Kunststoffprofil, insbesondere einem Hohlkammerprofil. In und / oder an der Extrusionsdüse können Temperiervorrichtungen vorgesehen sein, mit denen z.B. das fertige Kunststoffprofil nach dem Austreten aus der Extrusionsdüse 2 gekühlt werden kann. Auch ist es möglich, dass im Inneren der Extrusionsdüse eine Temperiervorrichtung das sich formende Kunststoffprofil kühlt und / oder aufheizt.

Eine Kalibriervorrichtung 3 nimmt das aus der der Extrusionsdüse 2 kommende, noch thermoplastisch verformbare Kunststoffprofil 10 auf und fixiert es durch Abkühlung auf die gewünschten Abmessungen.

Die Abkühlung erfolgt in der Kalibriervorrichtung 3 in einer Nasskalibrierung und / oder einer Trockenkalibrierung. Bei der Nasskalibrierung wird Wärmeenergie durch Wasser abgeführt, das mit dem Kunststoffprofil 10 in Kontakt gebracht wird.

Eine Abzugsvorrichtung 4 ist der Kalibriervorrichtung 3 nachgeschaltet, wobei dabei typischerweise das Kunststoffprofil 10 durch einen Raupenabzug gezogen wird.

Nach der Abzugsvorrichtung 4 ist in Extrusionsrichtung E eine Ablängvorrichtung 5 angeordnet, in der das kontinuierlich erzeugte Kunststoffprofil 10 z.B. mit einer Säge, auf ein vorgegebenes Maß zugeschnitten wird.

Eine Verwiegevorrichtung 6, die der Ablängvorrichtung 5 nachgeschaltet ist, ermöglicht, dass jede einzelne Profilstange im laufenden Extrusionsprozess verwogen wird.

Das Ergebnis soll regelmäßig ein Kunststoffprofil 10 sein, dessen Materialeigenschaften, dessen Oberfläche und dessen innere und äußere Maßhaltigkeit vorgegebene Anforderungen erfüllen müssen.

Im Folgenden werden Ausführungsformen für eine Steuerung oder Regelung beschrieben, die dies gewährleisten können.

Eine Profilüberwachungsvorrichtung 20 dient dabei der Erfassung mindestens eines Profilparameters des Kunststoffprofils 10 nach dem Austreten aus der Extrusionsdüse 2. Dies bedeutet dass eine Eigenschaft des Kunststoffprofils 10 auf dem Weg zwischen Extrusionsdüse 2, der Kalibriervorrichtung 3, der Abzugsvorrichtung 4, der Ablängvorrichtung 5, der Verwiegevorrichtung 6 und / oder in mindestens einer der jeweiligen Vorrichtungen 3, 4, 5, 6erfasst wird. Dazu können z.B. Sensoren dienen, die auf die entsprechende Eigenschaft des Kunststoffprofils 10 ausgerichtet sind.

Neben mindestens einem Profilparameter wird durch eine Prozessüberwachungsvorrichtung 21 zusätzlich oder alternativ noch mindestens ein Prozessparameter im und / oder vor dem Extruder1, der Extrusionsdüse 2, der Kalibriervorrichtung 3, der Abzugsvorrichtung 4, der Ablängvorrichtung 5 und / oder der Verwiegevorrichtung 6 erfasst. Die Erfassung kann dabei ebenso in den Vorrichtungen 1, 2, 3, 4, 5, 6 und / oder auf dem Weg des Kunststoffprofils zwischen den Vorrichtungen 1, 2, 3, 4, 5, 6 erfolgen.

Die Profilüberwachungsvorrichtung 20 und die Prozessüberwachungsvorrichtung 21 sind hier getrennt dargestellt, wobei diese auch auf einem Rechner integriert sein können.

Die Daten Profilüberwachungsvorrichtung 20 und / oder der Prozessüberwachungsvorrichtung 21 werden dann durch eine Steuervorrichtung 30 dazu verwendet, mindestens eine Stellgröße S1, S2, S3, S3, S4, S5, S6 am Extruder 1, an der Extrusionsdüse 2, an der Kalibriervorrichtung 3, an der Abzugsvorrichtung 4 ,an der Ablängvorrichtung 5 und / oder an der Verwiegevorrichtung 6 in Abhängigkeit von den Daten einzustellen.

Somit liegt hier eine Struktur einer Mehrgrößenregelung vor, bei der die Eingangsdaten von im Kunststoffprofil 10 und / oder von den Einheiten 1, 2, 3, 4, 5, 6 der Extrusionsvorrichtung gewonnen werden. Dabei ist es nicht zwingend, dass immer alle Eingangs- und Ausgangsgrößen miteinander verknüpft werden.

Die Steuervorrichtung 30 verfügt über ein Mittel, mit dem Eingangsdaten in Stellgrößen S1, S2, S3, S4, S5, S6 umgerechnet werden. Dieses Mittel kann z.B. ein Regelgesetz (z.B. ein PID-Regler, ein modellbasierter Regler) sein, das einen Eingang mit einem Ausgang, d.h. einer Stellgröße S1, S2, S3, S4, S5, S6 fest verknüpft. Das Mittel kann aber auch ein komplexeres Modell aufweisen, bei dem viele Eingänge mit vielen Ausgängen, d.h. Stellgrößen S1, S2, S3, S4, S5, S6 verknüpft. Eine solches Modell kann als Rechenmodell vorgegeben werden und / oder in Form eines selbstlernenden Modells, z.B. im Rahmen des maschinellen Lernens.

Im Folgenden wird zunächst auf einige Profilparameter eingegangen. So kann z.B. mit einem optischen Sensor (z.B. einer Kamera und einer Bildverarbeitung) eine Wanddicke des Kunststoffprofils erfasst werden. Die Wanddicke kann dabei eine Außenwandung als auch die Wandung einer Hohlkammer sein.

Ebenfalls mit einem optischen Sensor kann mindestens ein Parameter betreffend die Oberflächengüte, insbesondere die Farbe, den Glanz, die Streifigkeit, die Rauigkeit und / oder der Glanz ermittelt werden. Dies kann z.B. jeweils zwischen den Einheiten 1, 2 3, 4, 5, 6 erfolgen, da hier das Kunststoffprofil 10 gut zugänglich ist.

Mit einem Sensor, z.B. einer Kamera kann mindestens ein Parameter der Formabweichung des Kunststoffprofils 10 von einer vorgegebenen Form erfasst werden. Z.B. mit einer Bildverarbeitung kann insbesondere ein Krümmungsparameter und / oder ein Winkelparameter ermittelt werden, der die Abweichung von einer Norm darstellt.

Mit einem Infrarotsender kann auch noch mindestens eine Temperatur des Kunststoffprofils 10 ermittelt werden, wobei aus Gründen der Zugänglichkeit, auch diese Messung sinnvollerweise zwischen den Einheiten 1, 2, 3, 4, 5, 6 erfolgt.

Im Folgenden werden einige Prozessparameter dargestellt, die alternativ oder zusätzlich zu den Profilparametern verwendet werden können.

Die Geschwindigkeit des Kunststoffprofils 10 wird durch die Abzugsgeschwindigkeit der Abzugsvorrichtung 4 bestimmt.

Ein Kamerasystem oder ein anderer optischer Sensor kann auch dazu verwendet werden, um mindestens eine korrekte geometrische Ausrichtung der Kalibriervorrichtung 3 und / oder der Abzugsvorrichtung 5 auf die Extrusionsdüse 2sicherzustellen. Wenn z.B. die Zentrierung des Kunststoffprofils 10 vom Normwert abweicht, führt dies z.B. zu Verbiegungen, Verdrehungen und Spannungen im Material
Für eine richtige Abkühlung, insbesondere in der Kalibriervorrichtung 4, kann z.B. mindestens ein Temperaturwert und / oder ein Druckwert im Extruder 4, in der Extrusionsdüse 2, in der Kalibriervorrichtung 3 und / oder in der Abzugsvorrichtung 4 gemessen werden, da sich entlang des Extrusionsprofils 10 in der Regel ein vorbestimmtes Temperaturprofil einstellen soll.

An der Abzugsvorrichtung 4 kann z.B. die Abzugskraft, ein Schlupf und / oder die Abzugsgeschwindigkeit gemessen werden, da diese Parameter einen Einfluss auf das gesamte Kunststoffprofil 10 haben.

Parameter, die an der Ablängvorrichtung 5 erfasst werden können, sind die Längen und / oder die Masse der abgetrennten Kunststoffprofile 10.

An der Verwiegevorrichtung 6 kann das Gewicht der abgelängten Profilstangen ermittelt werden.

Somit weist die Ausführungsform eine Fülle von Parametern auf, die als Eingangsgrößen für die Steuervorrichtung 30 dienen können. Dabei ist zu beachten, dass natürlich nicht in jedem Fall alle der Eingangsgrößen gleichzeitig gemessen werden müssen. Es können Teilmengen der Profilparameter und / oder der Prozessparameter verwendet werden.

In der Steuervorrichtung 30 können diese Eingangswerte dann zur Bestimmung von Stellgrößen S1, S2, S3, S4, S5, S6 verwendet werden. Auch hier ist es nicht zwingend, dass alle möglichen Stellgrößen S1, S2, S3, S4, S5, S6 verwendet werden.

Im Folgenden werden einige Stellgrößen näher beschrieben. Eine Stellgröße am Extruder 1 ist die Mischungseinstellung des dem Extruder 1 zugeführten Kunststoffs. Diese Stellgröße S1 kann z.B. dazu verwendet werden festgestellte Abweichungen in der Kunststoffqualität und / der Farbe auszugleichen. Auch die Temperatur und / oder die Drehzahl der Extrusionsschnecken im Extruder haben Einfluss auf die Art des auszubildenden Kunststoffprofils 10.

Für die Extrusionsdüse 2 kann z.B. mindestens eine Temperatur eine sinnvolle Stellgröße S2 sein. Dabei ist nicht zwangsläufig eine gemittelte Temperatur über die Extrusionsdüse 2 oder den Querschnitt des Kunststoffprofils 10 gemeint. Vielmehr können mit geeigneten Temperiervorrichtungen an und / oder in der Extrusionsdüse 2 gezielt Teile des Kunststoffprofils 10 beeinflusst werden. Die Temperatur in der Extrusionsdüse 2 hat einen Einfluss auf die Viskosität des Kunststoffes und damit auf die Fließgeschwindigkeit.

In der Kalibriervorrichtung gibt es eine Reihe von Stellgrößen S3, die Einfluss auf ein thermisches Verhalten haben. So kann z.B. die Temperatur und / oder der Wasserdurchfluss an einer oder mehreren Stellen geregelt werden. Die Verwendung des Druckes als Stellgröße S3 hat Einfluss auf die Form des Kunststoffprofils 10. Es ist aber auch möglich geometrische Parameter mit Stellgrößen S3 einzustellen, indem z.B. die mindestens eine Stellgröße S3 an der Kalibriervorrichtung 3 eine automatische Positionierungsänderung mindestens einer Kalibrierdüse in Bezug auf die Extrusionsdüse 2 ist. Damit können Ausrichtungsfehler zwischen der Kalibriervorrichtung 3 und der Extrusionsdüse 2 ausgeglichen werden.

An der Abzugsvorrichtung 4 kann die mindestens eine Stellgröße S4 die Abzugsgeschwindigkeit und / oder den Anpressdruck beeinflussen.

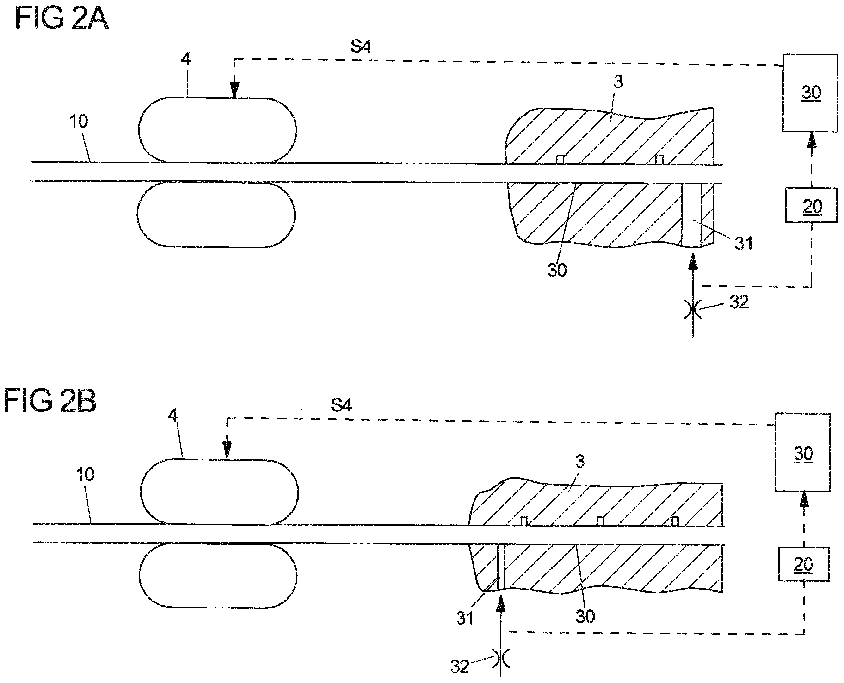

In dem in Fig. 2A und Fig. 2B gezeigten Ausführungsbeispiel ist die Kalibriervorrichtung 3 dazu eingerichtet, eine Erfassung des Füllgrads der Wände von Kunststoffprofilen, insbesondere Vollprofilen, zu ermöglichen. An der Kalibriervorrichtung 3 ist im Betrieb ein Spalt zwischen einer inneren Oberfläche eines Durchlasses 30 der Kalibriervorrichtung 3, durch den das Kunststoffprofil 10 hindurchtritt, und dem Kunststoffprofil 10 ausgebildet. Die Kalibriervorrichtung 3 ist weiterhin dazu eingerichtet, ein gasförmiges Medium in den Spalt zu leiten. Das gasförmige Medium wird durch einen Durchgang 31 von einer Quelle 32 für das gasförmige Medium, wie beispielsweise eine Luftdüse, ausgehend in den Spalt geleitet.

Der Durchgang 31 kann, wie in Fig. 2A dargestellt, in einem in Extrusionsrichtung vorderen oder, wie in Fig. 2B dargestellt, in einem in Extrusionsrichtung hinteren Abschnitt der Trockenkalibrierung angeordnet sein. Grundsätzlich kann der Durchgang 31 ebenso in einem mittleren Abschnitt der Kalibriervorrichtung 3 angeordnet sein. Das gasförmige Medium kann auch durch eine Vielzahl von Durchgängen in den Durchlass geleitet werden.

Das gasförmige Medium wird durch Vakuumkanäle abgesaugt und / oder entweicht beispielsweise durch einen vorderen Einzug aus der Trockenkalibrierung. Ein Staudruck des gasförmigen Mediums ist abhängig von einer Größe des Spaltes. Verengt sich der Spalt, dann steigt der Staudruck im Medium. Das bedeutet, dass die Wand des Kunststoffprofils dicker ist. Der Füllgrad ist also größer. Der Staudruck wird durch Druckmessung in der Zuleitung bei einem konstanten Volumenstrom des gasförmigen Mediums bestimmt.

Eine Wahrscheinlichkeit eines Hängenbleibens des Kunststoffprofils an der Trockenkalibrierung ist abhängig von der Größe des Spalts. Bei einem kleinen Spalt ist die Wahrscheinlichkeit des Hängenbleibens größer als bei einem großen Spalt. Der Füllgrad wird über die Profilüberwachungsvorrichtung gegebenenfalls anhand des Staudrucks erfasst. Die Steuervorrichtung verwendet die Daten und ist dazu eingerichtet, eines oder mehrere von folgendem durchzuführen: (i) Auslösen eines Alarms, (ii) Einstellen einer Stellgröße S4 an der Abzugsvorrichtung 4 in Abhängigkeit von des Füllgrads, beispielsweise die Abzugsvorrichtung 4 schneller oder langsamer das Kunststoffprofil abziehen lassen oder die Kalibriervorrichtung 3 in Extrusionsrichtung nach hinten fahren lassen.

Durch die Erfassung des Füllgrades wird die Gefahr des Hängenbleibens des Kunststoffprofils zwischen Extrusionsdüse und Trockenkalibrierung verringert. Dadurch kann die Produktion von Ausschuss, also von Kunststoffprofilen mit unerwünschten Profilparametern, verringert werden. Außerdem sinkt das Risiko die Produktion zur Wartung der Extrusionsvorrichtung unterbrechen zu müssen.

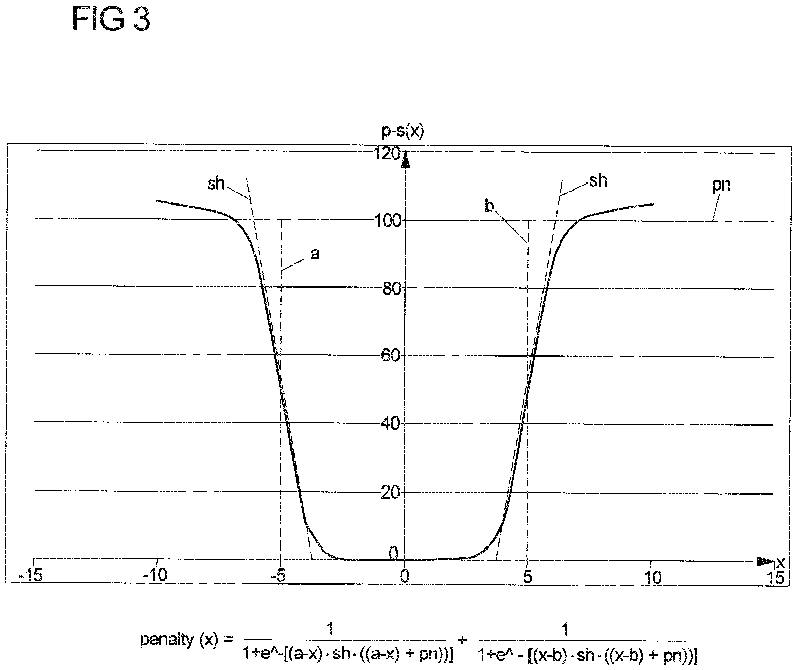

Fig. 3 zeigt eine Darstellung einer Penalty-Funktion als Funktion p_s(x)=1/(1+e^-((a-x)*sh*((a-x)+pn)) + 1/(1+e^-((x-b)*sh*((x-b)+pn)). Die Funktion ist symmetrisch. Die Parameter a und b geben die Grenzen eines gewünschten Intervalls für mindestens eine Stellgröße, mindestens einen Prozessparameter oder mindestens einen Profilparameter an. Der Parameter sh steht für eine Schärfe einer Nebenbedingung, die durch die Penalty-Funktion beschrieben wird, im Bereich der Grenzen. Der Parameter pn steht für einen Faktor für die Bedeutung der Nebenbedingung wiedergibt. Mathematisch gesehen steht sh für eine Steigung der Funktion p_s an den Grenzen a, b und pn für eine Höhe, auf die p_s an den Grenzen a, b ansteigt. In dem dargestellten Ausführungsbeispiel ist das gewünschte Intervall zwischen den Werten -5 und 5 angeordnet. Eine Strafe für Werte x, die außerhalb des gewünschten Intervalls liegen, liegt bei einer Höhe pn von 100. die Steigung sh beträgt 2. Eine derartige Penalty-Funktion kann beispielsweise für die Vorgabe eines gewünschten Intervalls für das Vakuum an der Kalibriervorrichtung oder die Bombierung des Kunststoffprofils genutzt werden. Eine derartige Funktion kann insbesondere dazu geeignet sein, ein möglichst großes erlaubtes Intervall für die Auswahl der mindestens eine Stellgröße, des mindestens ein Prozessparameters oder des mindestens einen Profilparameters vorzugeben, so dass das Prozessfenster möglichst groß ist. Ziel ist ein minimales Profilgewicht bei maximalem Ausstoß, minimalem Ausschuss sowie minimalem Energieverbrauch.

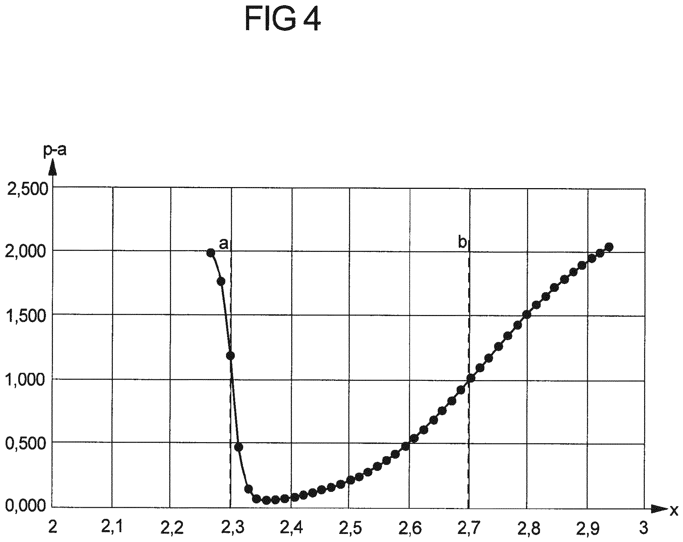

Fig. 4 zeigt eine weitere Ausführung einer Penalty-Funktion p_a(x). Die Funktion ist asymmetrisch. Die Parameter a und b geben die Grenzen eines gewünschten Intervalls mindestens einer Stellgröße, mindestens eines Prozessparameters oder mindestens eines Profilparameters an. Die Steigung an den Grenzen ist im vorliegenden Ausführungsbeispiel unterschiedlich. Werte von x, die unterhalb der Grenze a liegen werden somit stärker bestraft (also bei der Optimierung nicht eingesetzt oder weniger berücksichtigt), als Werte, die oberhalb der Grenze b liegen. Eine Optimierung unter einer derartigen Nebenbedingung erfolgt also eher dahin, dass Werte oberhalb der Grenze a vorgegeben werden. Eine derartige Nebenbedingung kann insbesondere für Wandstärke oder Metergewicht eines Kunststoffprofils geeignet sein, da Wandstärke und Metergewicht nicht unter eine bestimmte minimale untere Grenze fallen dürfen, größere Werte aber grundsätzlich hinnehmbar sein können. Außerdem liegt das Minimum nahe der unteren Grenze, sodass die Funktion zur Optimierung des Materialverbrauchs verwendet werden kann.

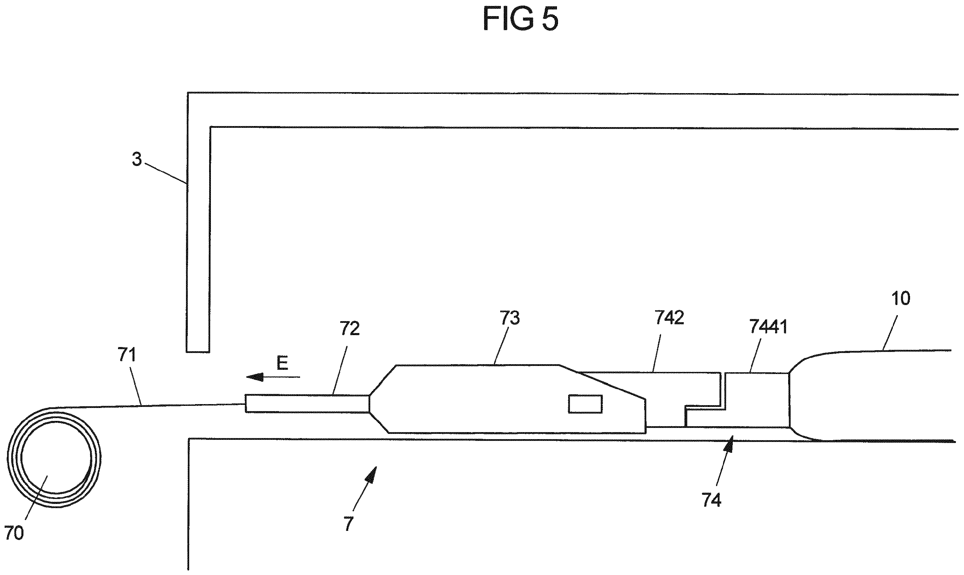

Fig. 5 zeigt eine Ansicht einer Einziehvorrichtung 7 an einer Kalibriervorrichtung 3 mit einem Wickelelement 70, an dem ein als Seil ausgebildetes flexibles Zugmittel 71 aufwickelbar ist. An dem flexiblen Zugmittel 71 ist ein starres Zugmittel 72, das als Stange ausgebildet ist, angeordnet. Die Stange 72 ist an einem Kopplungselement 73 angeordnet. Das Kopplungselement 73 ist mit einem Anschlusselement 74 verbunden. Das Anschlusselement 74 ist mit einem Kunststoffprofil 10 verbunden, das mit der Einziehvorrichtung 7 durch die Kalibriervorrichtung 3 gezogen wird.

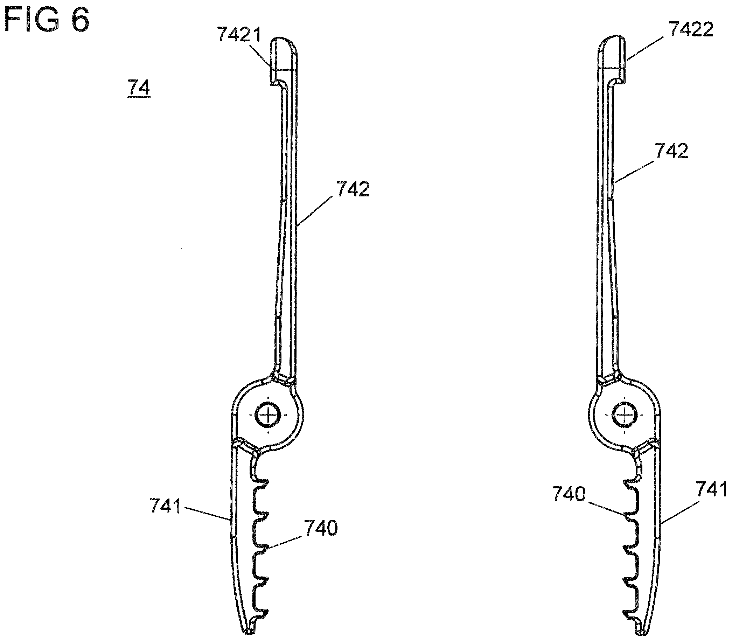

Fig. 6 zeigt eine Ansicht eines Anschlusselements 74. Das Anschlusselement 74 umfasst zwei Zangenteile, die zangenartig miteinander verbindbar sind, so dass ein Maul 7410 des Anschlusselements 74 durch eine scherenartige Bewegung der zwei Zangenteile relativ zueinander öffenbar ist. An einem Anschlussabschnitt 741, der zum Anschluss an das Kunststoffprofil 10 vorgesehen ist, ist an jedem Zangenteil eine Verzahnung 740 angeordnet. Das Anschlusselement 74 weist weiterhin einen Kopplungsabschnitt 742 auf, der zum Verbinden mit dem Kopplungselement 73 vorgesehen ist. An dem Kopplungsabschnitt 742 ist für jedes Zangenteil ein Vorsprung 7421, 7422 angeordnet, wobei die Vorsprünge der Zangenteile im geschlossenen Zustand des Anschlusselements 74 aneinander angrenzen.

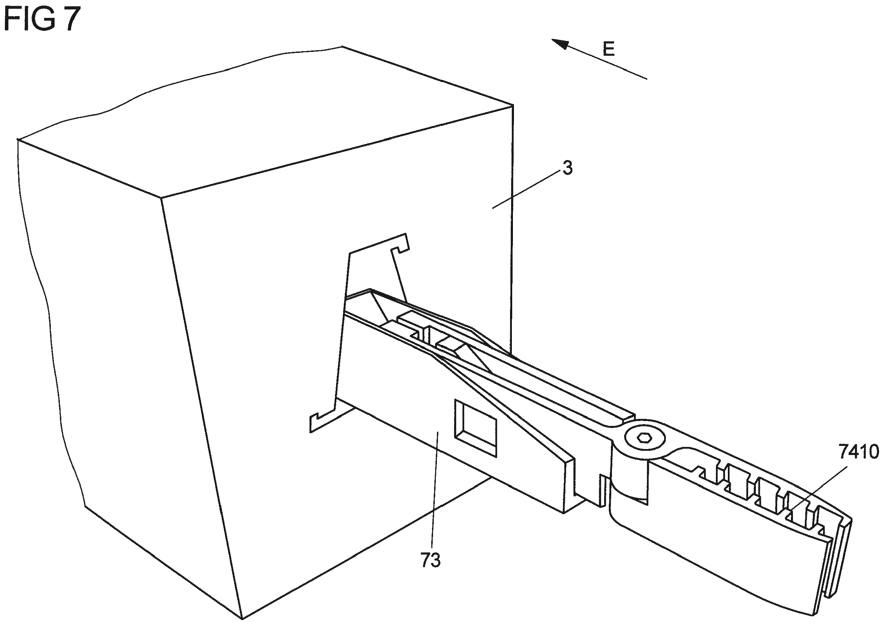

Fig. 7 zeigt eine Ansicht einer Einziehvorrichtung 7, die an einer Extrusionsvorrichtung angeordnet ist. Die Einziehvorrichtung 7 wurde entgegen einer Extrusionsrichtung in eine Kalibriervorrichtung 3 eingeschoben, so dass ein Anschlusselement 74 der Einziehvorrichtung 7 aus der Kalibriervorrichtung 3 zum Anschluss eines Kunststoffprofils 10 an die Einziehvorrichtung 7 hervorsteht.

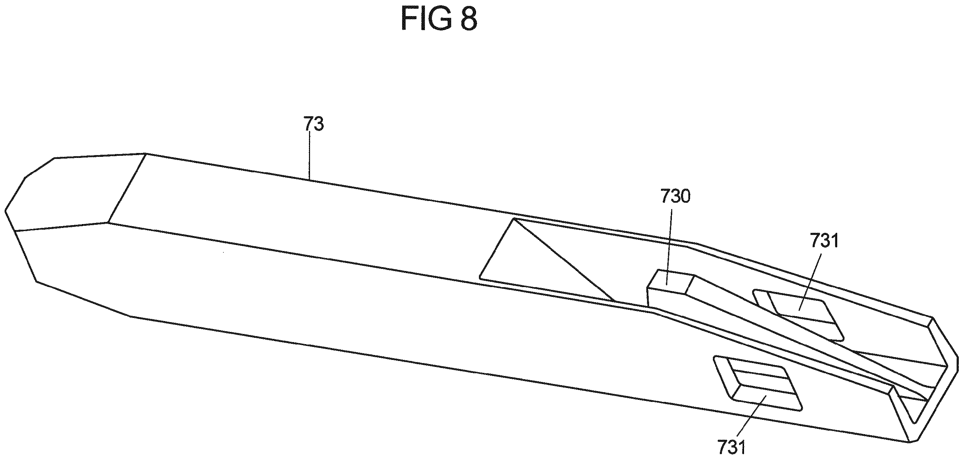

Fig. 8 zeigt eine Ansicht eines Kopplungselements 73. Das Kopplungselement 73 weist einen Vorsprung 730 auf, an dem das Anschlusselement 74 festlegbar ist. Weiterhin sind an dem Kopplungselement 73 zwei Aussparungen 731 vorgesehen, in die Flügel 751 eines Einschiebeelements 75 eingreifen können. Grundsätzlich kann an dem Kopplungselement 73 mindestens eine Aussparung 731 für das Einschiebeelement 75 vorgesehen sein.

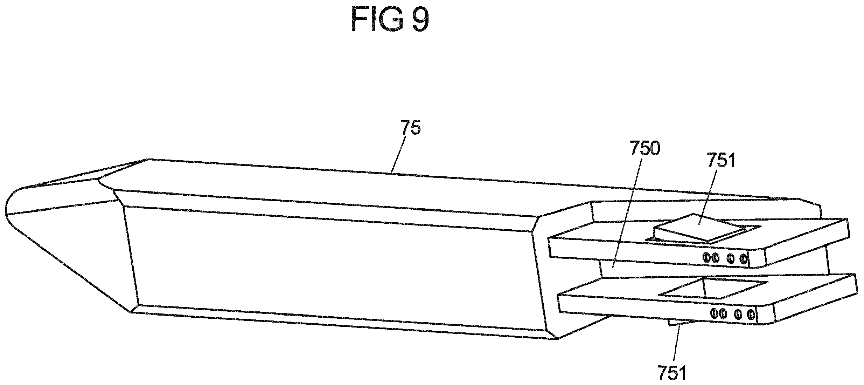

Fig. 9 zeigt eine Ansicht einer Ausgestaltung eines Einschiebeelements 75. Das Einschiebeelement 75 dient zum Anschluss an das Kopplungselement 73 zum einfachen Durchschieben des Kopplungselements 73 durch die Kalibriervorrichtung 3 oder einer andere Vorrichtung der Extrusionsvorrichtung entgegen der Extrusionsrichtung E. Das Einschiebeelement 75 wird vor dem Einziehvorgang des Kunststoffprofils 10 von dem Kopplungselement 73 abgenommen. Danach wird das Anschlusselement 74 eingehängt. Das Einschiebeelement 75 weist einen Eingriff 750 auf, in dem der Vorsprung 730 des Anschlusselementes 74 einlegbar ist. Weiterhin weist das Einschiebeelement 75 zwei Flügel 751 auf, die dazu vorgesehen sind, in Aussparungen 731 an dem Anschlusselement 74 einzugreifen, so dass das Anschlusselement 74 und das Einschiebeelement 75 in einer Richtung entgegen der Extrusionsrichtung formschlüssig verbunden sind.

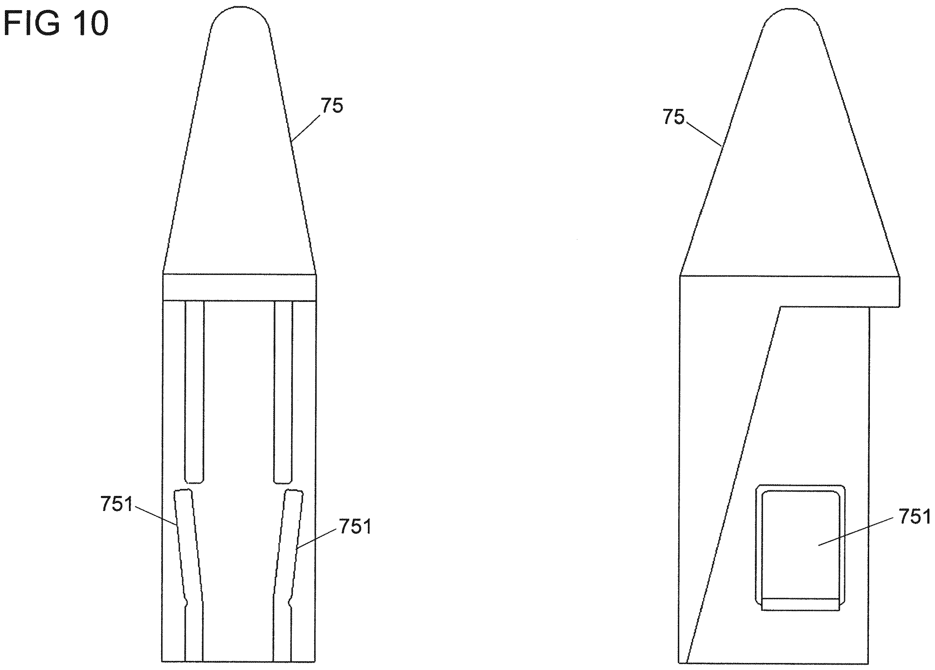

Fig. 10 zeigt weitere Ansichten einer Ausgestaltung des Einschiebelements 75.

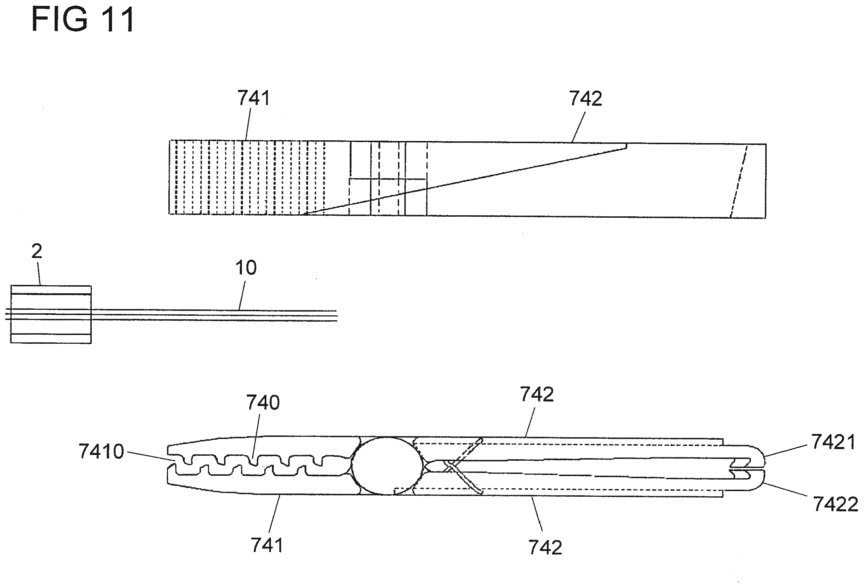

Fig. 11 zeigt Ansichten einer Ausgestaltung eines Anschlusselements 74 und ein extrudiertes Kunststoffprofil 10, an das das Anschlusselement 74 anschließbar ist.

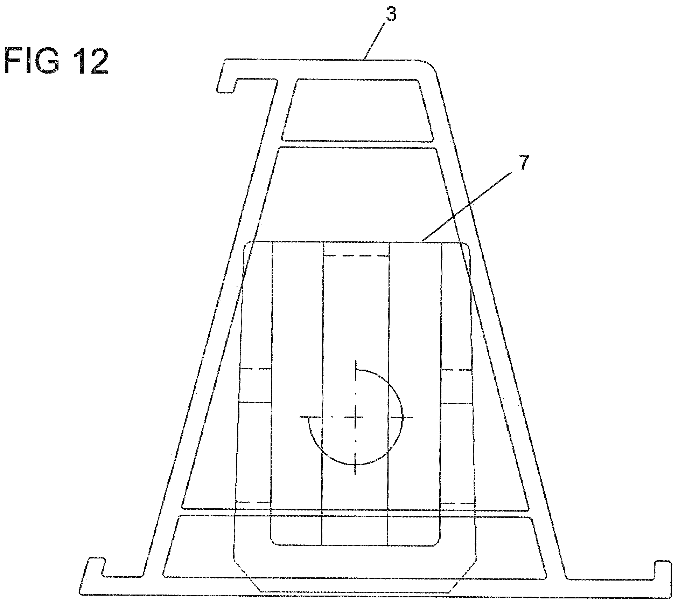

Fig. 12 zeigt einen Querschnitt durch eine Kalibriervorrichtung 3, durch die eine Einziehvorrichtung 7 gezogen wird.

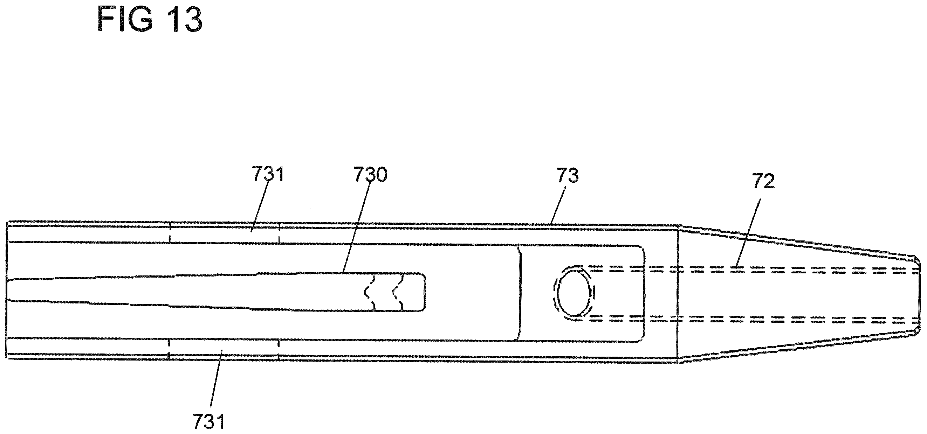

Fig. 13 zeigt eine Ansicht einer Ausgestaltung eines Kopplungselements 73. An dem Kopplungselement 73 ist ein starres Zugmittel 72 angeordnet;

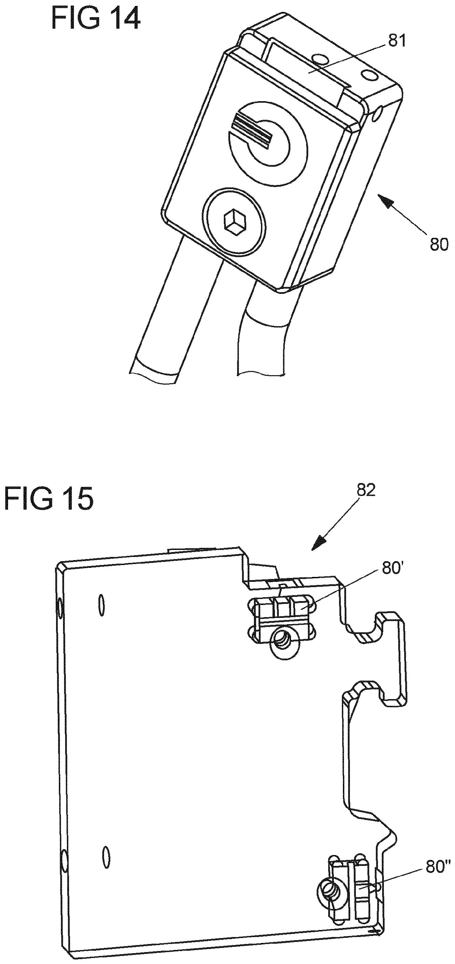

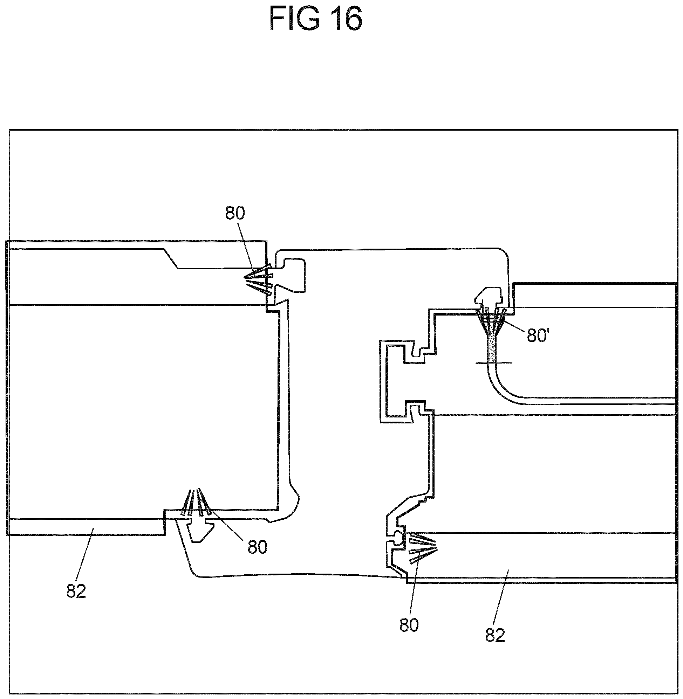

Fig. 14 zeigt eine schematische Darstellung einer Reinigungsvorrichtung 80 mit einer Flachstrahldüse 81. Damit kann z.B. ein Strahl eines Reinigungsmittels in definierter Breite und Richtung erzeugt werden, der insbesondere die noch weiche Oberfläche des Kunststoffprofils 3 nicht beeinträchtigt. Eine solche Reinigungsvorrichtung 80 kann Teil eines Systems sein, mit dem ein Reinigungsmittel in die Kalibriervorrichtung 3 einbringbar oder mit ihr verbindbar ist (siehe Fig. 16), um diese von weichen Ablagerungen zu entfernen, die sich mit der Zeit - abhängig von der Materialzusammensetzung des extrudierten Kunststoffprofils 10 - an der Stahloberfläche im Inneren der Kalibriervorrichtung 3 ansammeln.

Die Reinigungsvorrichtung 80 wird nicht nur mit Reinigungsmittel versorgt, sondern auch mit Signalen von der Steuervorrichtung 30. Damit kann insbesondere eine zeitliche und / oder mengenmäßige Regelung des Strahls erfolgen, wobei das Reinigungsmittel eine Flüssigkeit, ein Gas oder ein Gemisch aus beiden aufweisen kann. Eine Möglichkeit der Steuerung besteht darin, dass das Reinigungsmittel intervallmäßig aufgetragen wird. Wenn das Reinigungsmittel als dünner Film aufgetragen wird, kann es sich in den Spalt zwischen Kalibriervorrichtung und Kunststoffprofile einziehen und dort eine Reinigung bewirken.

Fig. 15 zeigt ein Bauelement 82, das mit einer hier nicht dargestellten Kalibriervorrichtung 3 verbindbar ist, mit zwei Reinigungsvorrichtungen 80, wobei die obere Reinigungsvorrichtung 80` das Reinigungsmittel nach oben abstrahlt, die untere Reinigungsvorrichtung 80" strahlt nach rechts. Die Reinigungsvorrichtung 80 ist hier mit einer Flachstrahldüse 81 ausgebildet, wobei grundsätzlich auch andere Düsenformen, z.B. mit einem kreisförmigen Querschnitt verwendet werden können.

Die Abstrahlungen des Reinigungsmittels sind in Fig. 16 genauer dargestellt, wobei zwei Bauelemente 82 mit einer schematisch dargestellten Kalibriervorrichtung 3 mit insgesamt vier Reinigungsvorrichtungen 80 versehen sind, die auch wieder Flachstrahldüsen aufweisen. Die Bauelemente 82 sind beidseits des Fließkanals für das Kunststoffprofils 10 angeordnet.

In der hier dargestellten Ausführungsform erfolgt das Aufbringen des Reinigungsmittel gezielt auf einwandige Profilsektionen, wobei in Fig. 16 entsprechend die Konturen im Fließkanal dargestellt sind. Die einwandigen Profilsektionen können auch etwas vom Kunststoffprofil 10 abstehen. Dabei kann das Reinigungsmittel sich im Rahmen einer Schleppströmung in den Spalt zwischen Kunststoffprofil 10 und der Kalibriervorrichtung 3 (hier durch eine durch eine Rechteckfläche andeutet) einziehen.

Bei der Reinigungsvorrichtung 80' oben rechts in der Fig. 16 ist die Zuleitung des Reinigungsmittels dargestellt, das hier nach oben abgegeben wird. Bei den drei anderen Reinigungsvorrichtungen 80 sind die Abstrahlrichtungen nur graphisch angedeutet.

Grundsätzlich können auch mehr oder weniger Reinigungsvorrichtungen 80 eingesetzt werden

### Bezugszeichenliste

- 1: Extruder
- 2: Extrusionsdüse
- 3: Kalibriervorrichtung
- 30: Spalt
- 4: Abzugsvorrichtung
- 5: Ablängvorrichtung
- 6: Verwiegevorrichtung

- 10: Kunststoffprofil

- 20: Profilüberwachungsvorrichtung
- 21: Prozessüberwachungsvorrichtung

- 30: Steuervorrichtung

- 7: Einziehvorrichtung
- 70: Wickelelement
- 71: flexibles Zugmittel
- 72: starres Zugmittel
- 73: Kopplungselement
- 730: Vorsprung
- 731: Aussparung
- 74: Anschlusselement
- 740: Verzahnung
- 741: Anschlussabschnitt
- 7410: Maul
- 7411: Klemmbacke
- 7412: Klemmbacke
- 742: Kopplungsabschnitt
- 7421: Vorsprung
- 7422: Vorsprung
- 75: Einschiebeelement
- 750: Eingriff
- 751: Flügel
- 80: Reinungsvorrichtung
- 81: Flachstrahldüse
- 82: Bauelement

- a, b: Grenze
- sh: Schärfe
- pn: Höhe

- E: Extrusionsrichtung

## Patentansprüche

1. Extrusionsvorrichtung für ein Kunststoffprofil (10) mit einem Extruder (1), einer am Ausgang des Extruders (1) angeordneten Extrusionsdüse (2) zur Formung des Kunststoffprofils (10) und einer Kalibriervorrichtung (3), durch die das Kunststoffprofil (10) anschließend an die Extrusionsdüse (2) führbar ist,
**dadurch gekennzeichnet,**
**dass** an der Kalibriervorrichtung (3) mindestens eine Reinigungsvorrichtung (80) zur Abgabe eines Reinigungsmittels, insbesondere durch eine Flachstrahldüse (81), angeordnet ist.

2. Extrusionsvorrichtung nach Anspruch 1, **dadurch gekennzeichnet, dass** die mindestens eine Reinigungsvorrichtung (80) in der Kalibriervorrichtung (3), insbesondere in einem Fließkanal der Kalibriervorrichtung, integriert, mit der Kalibriervorrichtung (3) verschraubt und/oder magnetisch an der Kalibriervorrichtung (3) befestigt ist.

3. Extrusionsvorrichtung nach einem der Ansprüche 1 oder 2, **dadurch gekennzeichnet, dass** das Reinigungsmittel mit der mindestens einen Reinigungsvorrichtung (80) als dünner Film auf eine Oberfläche des Kunststoffprofils (10) aufbringbar ist, insbesondere mittels Schlitzen oder Taschen in der Kalibriervorrichtung (3), so dass das Reinigungsmittel durch Schleppströmung vom Kunststoffprofil (10) mittransportierbar ist.

4. Extrusionsvorrichtung nach einem der vorangegangenen Ansprüche, **dadurch gekennzeichnet, dass** das Reinigungsmittel der Reinigungsvorrichtung (80) durch eine poröse Oberfläche, insbesondere durch einen porösen Sintereinsatz in der Kalibriervorrichtung (3), abgebbar ist.

5. Extrusionsvorrichtung nach einem der vorangegangenen Ansprüche, **dadurch gekennzeichnet, dass** das Reinigungsmittel gezielt auf eine einwandige, insbesondere abstehende Profilsektion des Kunststoffprofils (10) oder den gesamten Profilumfang abgebbar ist.

6. Extrusionsvorrichtung nach einem der vorangegangenen, **gekennzeichnet durch** eine Steuervorrichtung zur Steuerung der Abgabe des Reinigungsmittels.

7. Extrusionsvorrichtung nach Anspruch 6, **dadurch gekennzeichnet, dass** die Steuervorrichtung dazu eingerichtet und vorgesehen ist, die mindestens eine Reinigungsvorrichtung (80) zeitlich und mengenmäßig automatisch zu regeln.

8. Extrusionsvorrichtung nach einem der vorangegangenen Ansprüche, **dadurch gekennzeichnet, dass** das Reinigungsmittel intervallweise aufbringbar ist.

9. Extrusionsvorrichtung einem der vorangegangenen Ansprüche, **dadurch gekennzeichnet, dass** die Flachstrahldüse in einem Spalt zwischen der Extrusionsdüse (2) und der Kalibriervorrichtung (3) angeordnet ist.

10. Extrusionsvorrichtung nach Anspruch 9, **dadurch gekennzeichnet, dass** ein Ausgang der Flachstrahldüse abgeschrägt ist, so dass ein Sprühstrahl in Richtung der Kalibriervorrichtung (3) gelenkt wird.

11. Extrusionsvorrichtung nach einem der vorangegangenen Ansprüche, **gekennzeichnet durch** eine Belagsmesseinrichtung innerhalb der Kalibriervorrichtung (3), die dazu eingerichtet ist, Beläge zu erkennen, die **durch** den Abrieb von Extrudat und / oder in Wechselwirkung mit der Umgebung an der Kalibrierung anhaften, und die mit der Reinigungsvorrichtung (80) gekoppelt ist, um eine Reinigung der Kalibriervorrichtung (3) in Abhängigkeit eines gemessenen Grades an Verschmutzung auszulösen.
